# EUROPEAN PATENT SPECIFICATION

(11) **EP 2 063 582 B1**
(45) Date of publication and mention of the grant of the patent: **09.01.2013**
(21) Application number: 07121577.6
(22) Date of filing: 26.11.2007
(51) Int. Cl.: H04L 12/751, H04L 12/721, H04L 12/705

(54) **Method and device for finding the shortest non-looping paths**
Verfahren und Vorrichtung zum Auffinden der kürzesten Wege ohne Schleifen
Procédé et dispositif de recherche des chemins sans boucles les plus courts

(43) Date of publication of application: 27.05.2009
(73) Proprietor: Alcatel Lucent, 75007 Paris (FR)
(72) Inventor: Hoekstra, Gerard, J., 3825 BE, Amersfoort (NL)
(74) Representative: Wetzel, Emmanuelle

(56) References cited:
- US-A1- 2003 043 756
- US-A1- 2005 078 610
- US-A1- 2007 076 629
- BALASUBRAMANIAN RAJAGOPALAN ET AL: "A NEW RESPONSIVE DISTRIBUTED SHORTEST-PATH ROUTING ALGORITHM*" COMPUTER COMMUNICATION REVIEW, ACM, NEW YORK, NY, US, vol. 19, no. 4, 1 September 1989 (1989-09-01), pages 237-246, XP000133127 ISSN: 0146-4833

## Description

This invention concerns a method for providing non-looping routing paths in a network from a begin vertex to a destination vertex. Further, the invention concerns a routing device.

Many practical networks exist, for instance a subway network in a metropolitan area, a transportation network of roads, or a communication network. Users of such networks usually have the desire to plan for the most efficient way to traverse the network from an origin to a destination. The most efficient way may be the fastest, cheapest etc.

Often a graph is used to model a network and is therefore used to find the most efficient way through a certain network. The graph captures the characteristics of such a network in a generic way. The graph consists of two elements, namely a vertex (node) and an edge (arrow). In many applications a label or metric is assigned to either one of these elements, which represents the cost of using a certain element. Therefore, e.g., the edges are labelled with their respective costs. Traversing the graph from an origin to a destination in the most efficient way means to take the path through the graph which has the smallest cost accumulated over the used elements. A graph may have directed edges, which is then called directed graph or digraph.

US patent application US2007/076629 discloses a method for constraint based path determination. An explore message is sent out from the source node to a set of neighboring nodes towards the destination node. At each neighboring node, the method verifies if the required constraints are met and if this is the case, the particular node is added to the path. Then the explore message is forwarded from this particular node to its neighboring nodes. The method continues until all explore messages have reached the destination node. In order to assure that explore messages do not circulate endlessly in the network, "doubled back" explore messages are removed.

A conventional single shortest path finding algorithm is the Dijkstra algorithm disclosed in E.W. Dijkstra "A Note on Two Problems in connection with Graphs", Numerische Mathematik 1, p.269, 1959. This algorithm solves the problem of finding the shortest path from a begin vertex in a graph, i.e. the origin or source, to a destination. It turns out that one can find the shortest path from a given source to all points in a graph in the same time. The Dijkstra algorithm is applied to digraphs with nonnegative element metrics. In general, the metric may represent a distance, which implies that the shortest path through a graph then corresponds to the path with the smallest accumulated costs. The algorithm determines one single shortest path and just the cost of using it. The worst-case search time for the shortest path in a graph of n vertices and m edges is O(n²). If m is small compared to n², the search time is considerably smaller than O(m log n).

For example, a communication network is composed of network elements and links. The graph representation models the links as edges and the network elements as vertices. Many communication networks are composed of network elements and links such that multiple paths can be used to traverse the network. Thus, in the conventional single shortest path finding algorithms, only the shortest way or path through the network from a begin vertex to a destination vertex is known to an operator. In case of the failure of the shortest path through the network, e.g. due to broken link in a network, a complete recalculation of the shortest has to be performed. This can cost a lot of valuable time before a new path, in the present case of a communication network via the different network elements and links, has been recalculated from the begin vertex to the destination and the connection has been re-established.

The present invention provides a method and a routing device to render the management of network operation systems like telecommunication systems or routing applications for public transport systems more efficient and reliable.

According to a first aspect of the invention the problem is solved according to claim 1 by a method for providing non-looping routing paths in a network from a begin vertex to a destination vertex, the network has at least three vertices and at least three edges, the at least three vertices and the at least three edges defining a graph G and the edges of the Graph G having associated costs. The associated costs are preferably non-negative. The method comprises the steps of: a) Defining the begin vertex; b) Providing an empty shortest path vertices collection S wherein the collection S is the set of vertices whose shortest distance from the begin vertex is known ; c) Finding a vertex that is not in S with the lowest cost; d) Forwarding on outgoing edges of the lowest cost vertex the paths of its list of paths to its neighbouring vertex/vertices; e) Adding the forwarded paths to the path lists of each neighbouring vertex, respectively; f) Detecting looping paths and delete looping path wherein the looping paths are detected by determining if in a path a vertex is present twice; from the path lists of the neighbouring vertices wherein the looping paths are detected by determining if in a path a vertex is present twice; g) Adding the lowest cost vertex to S; and h) Repeating steps c), d), e), f) and g).

A path within a graph may be looping, e.g. if the path traverses two times the same vertex. Further a path has associated costs. The costs are the cost of the traversed vertices, if they have some cost, and the cost of the traversed edges. Further, a path may have a list of vertices, i.e. the vertices he has passed, and may have a list of edges, i.e. the edges the path has passed. Therefore, paths can be compared by their costs, their traversed edges and vertices. Two paths are the same when the list of edges is the same. Then, the list of vertices must be the same. Each vertex has a list of paths that describe the different ways of how this vertex can be reached from the begin vertex. Thus, according the method, the shortest non-looping paths through a graph and therefore through a network like a telecommunication network can be found. Further, it is recorded how each path traverses the network. With the method according to the invention, the operation of network management systems may be much easier and more efficient. Thus, for example, the network operators may save cost on finding efficient paths in interdomain network management. Further, the network elements can be simplified because routing functionality is not required. The method according to the invention may use digraph and nonnegative element metrics, i.e. edges labelled with non-negative numbers. A set shortest path vertices collection S, i.e. the set of vertices whose shortest distance from the source is already known, and for each vertex the paths from the begin vertex are stored. In each iteration the set of shortest path vertices collection S is extended with a further vertex with the shortest distance to the begin vertex or the lowest costs between the begin vertex and the vertex to be added to shortest path vertices collection S. Further, a number n of shortest paths may be limited, such that only n of shortest paths may be recorded for each vertex from the source or the begin vertex. The costs of the edge or the metric may indicate the degree e.g. of the efficiency when used. More general, it may be a degree in which an edge is preferred to be used. The metric may incorporate several parameters of the edge (e.g. the financial cost of using it, the capacity it has to offer). Further, the length of the list of paths for each vertex may be extended in case further paths should path the vertex. Thus, in a preferred embodiment of the invention, each vertex may record slightly more than n paths.

In a preferred embodiment of the invention in step d), also the costs of the respective paths are forwarded to the neighbouring vertex/vertices. Thus, the time to calculate the costs of a forwarded path may be reduced.

In a further embodiment of the invention in step d), a neighbouring vertex is deleted from S if the neighbouring vertex receives a new path. Therefore, more paths, in particular all non-looping paths, may be found using the method according to the invention.

In an embodiment of the method, the number of paths with the lowest costs to be find for each vertex is limited to a predefined number n.

Further in step f) of the method, each vertex that is in the looping path after the following vertex of the looping vertex, and that has forwarded the looping path may be provided to store an additional path in addition to the predefined number of paths to find, and the following vertex of the looping vertex may be deleted from the shortest path vertices collection. In particular in that case for each vertex in the loop having at least an incoming edge that is not part of the looping path, the vertex where the incoming edge is coming from is removed from S. The loop is in that case the part of the looping path between the vertex that is two times present in the path.

In an embodiment of the method, each edge is provided with a blacklist. Further, if a looping vertex is detected, the looping vertex is added to the blacklist of the edge, e.g. the outgoing edge from the lowest cost vertex directed to the looping vertex. Each outgoing edge may comprise a blacklist. This may lead to a more efficient method, as the number of iterations may be reduced. In particular this is the case when a path is not forwarded via an edge, if the path contains a vertex that is in the blacklist of the edge. In a further embodiment of the invention, each vertex may have common blacklist. When the method is initiated, e.g. in step a), empty blacklists or common blacklists, respectively, may be provided for each outgoing edge and/or each vertex, respectively.

In a further embodiment of the invention, steps c), d), e), f) and g) are repeated in step h) until no more vertex can be found in G that are reachable but not in S. Thus, for all vertices in the Graph G the n most efficient paths are found from the begin vertex. In specific graphs, where a vertex has only outgoing edges, it may not be reachable if this vertex is not the begin vertex. Thus, this vertex would never be added to the shortest path vertices collection S.

According to another embodiment of the invention, the network is a communication network, in particular a circuit switched or packet switched telecommunication network. In that case, the vertices may be network elements and the edges may be telecommunication links and the costs may correspond to the quality of service of a link and/or the distance between two network elements that are connected via that link.

According to an embodiment of the invention, the network may be a railway network or a road network. In such cases, intersections may be represented by vertices and the edges may be direct connections between two intersections, such that the edges correspond the the streets between two intersections. The costs may be the usage costs of the street, e.g. fuel and/or toll costs.

In a further embodiment of the invention, the at least a predefined number of shortest paths between the begin vertex and the destination vertex, in particular the two or three shortest paths between the begin vertex and the destination vertex, may be displayed, in particular to an operator. Thus, an operator can easily chose the optimal paths in his view from the begin vertex to the destination.

A further aspect of the invention concerns a routing device being adapted to perform preceding method. The routing device may be generic device, e.g. a computer or a network element of the telecommunication network.

Routing device may comprise in a further embodiment of the invention a memory adapted to store for each destination vertex at least two shortest paths, preferably at least three or four shortest paths, from the begin vertex to the destination vertex. Thus, the shortest paths may be stored in an array D in the device. The array D may contain for each vertex the n shortest paths. Further, the memory may be adapted to store for each path the respective associated costs from the begin vertex to the destination vertex.

Further aspects, advantages and features of the present invention are apparent from the dependent claims, the detailed description and the accompanying drawings.

A full and enabling disclosure of the present invention, including the best mode thereof, to one of ordinary skill in the art, is set forth more particularly in the remainder of the non limiting specification, including reference to the accompanying figures wherein:
Figs. 1a to 1j show iteration steps of an embodiment of the method according to the invention;
Figs. 2a to 2p show iteration steps of a further embodiment of the method according to the invention; and
Figs. 3a to 3l show iteration steps of another embodiment of the method according to the invention.

Reference will now be made in detail to the various embodiments of the invention, one or more examples of which are illustrated in the figures. The example is provided by way of explanation of the invention, and is not meant as a limitation of the invention. It is intended that the present invention includes modifications and variations.

The method according to the invention is explained in conjunction with the drawings. It may be implemented in a routing device. Procedures of a program that may be used to program a device that is adapted to carry out a typical method according to the invention are provided. The procedures here-below are written in a pseudo code for the sake of simplicity, such that they would have to be adapted if they were programmed for the device. The different steps of the method are separated in different sub procedures to enhance the readability. If a sub procedure is called, like in this case the "loopingPathFound" procedure or the "addpath" procedure, the name of the procedure is written in bold letters. If the sub procedure is finished the procedure jumps back to the place where the function or procedure has been called.

Find the n shortest paths through graph G

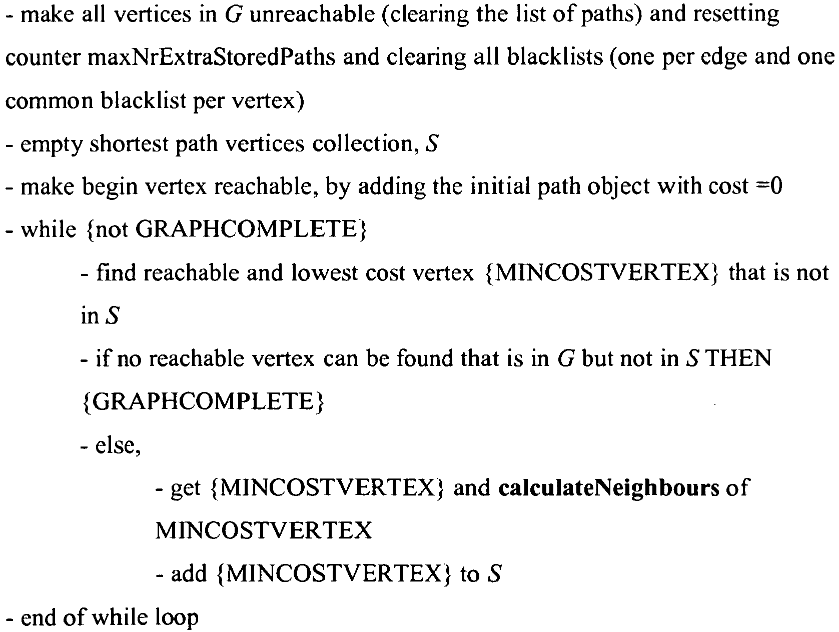

The number "n" is a positive integer as only a discrete number of paths may be found in networks. First, a vertex is made unreachable by clearing the list of paths. Clearing the maxNrExtraStoredPaths or setting the maxNrExtraStoredPaths to zero is an additional operation in the first step. A vertex is reachable if it is set to reachable. Therefore, first, all vertices in the graph G are unreachable. The first reachable vertex is then set as the begin vertex. Then, further vertices are set to reachable in the calculateNeighbours procedure, namely if they could be reached by a path. It should be noted, that in cases where a vertex has only outgoing edges that vertex is never reachable. Thus, the method is terminating if all reachable vertices of G are in the shortest path vertices collection S. In the following the procedure calculateNeigbours is listed:

calculateNeighbours:

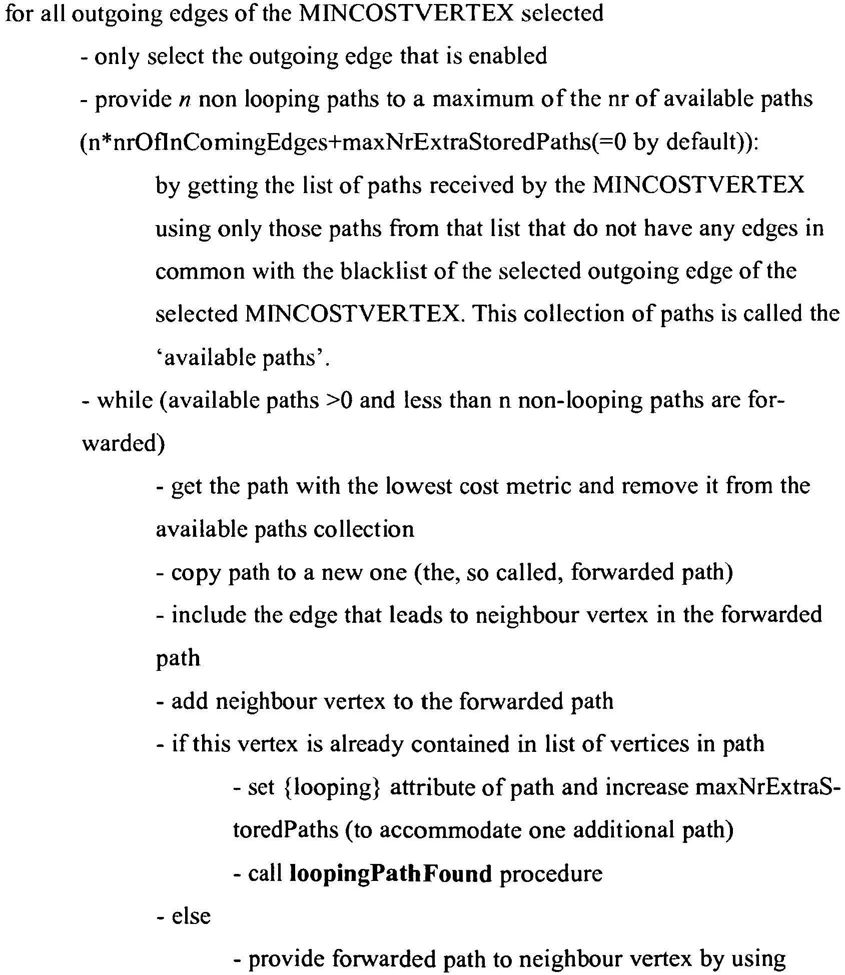

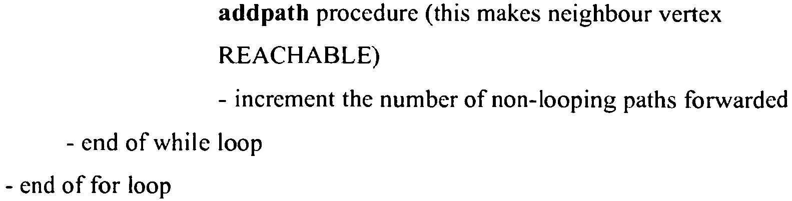

Each vertex is provided with a counter maxNrExtraStoredPaths that is empty or set to zero at the beginning of the method. Further, normally all edges are enabled in a graph. But, if the method is implemented, for example in a telecommunication network, some edges might be disabled for certain reasons, e.g. repair works or failures. In the following, the procedure for adding the path for a certain vertex is explained in the pseudo code.

Vertex addpath procedure, where vertex receives a non-looping path via a certain incoming edge

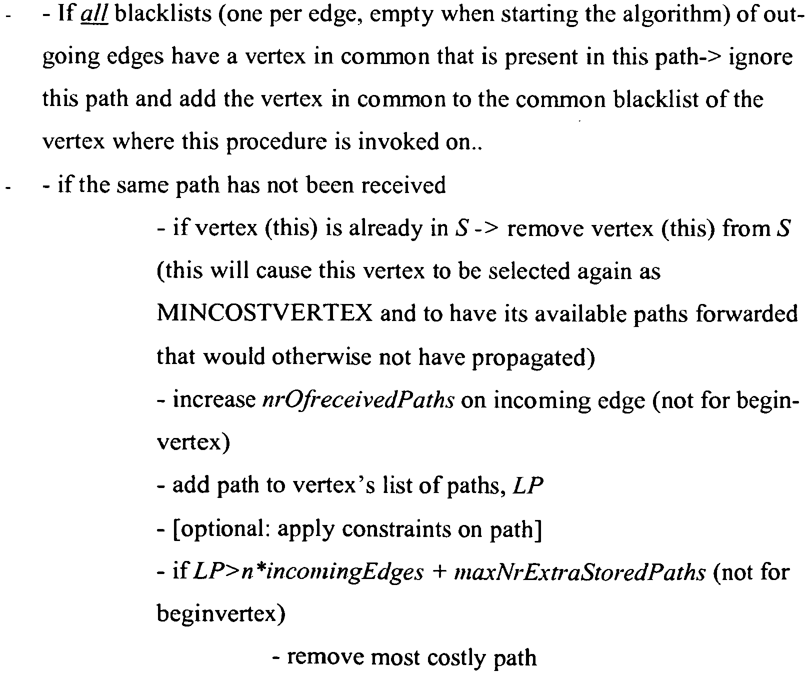

A path may be a path with the same list of edges it has already traversed. Thus, the path is also traversing the same vertices. If all outgoing edges share the same looping vertex, this vertex is added to the common blacklist of a vertex. The common blacklist associated to a vertex and the blacklist associated to the edges are empty by default or in the beginning of the method.

Vertex loopingPathFound procedure, where vertex has detected looping path during calculate neighbour call

(The looping vertex is always the next vertex as the path would have been detected as looping otherwise in an earlier stage) 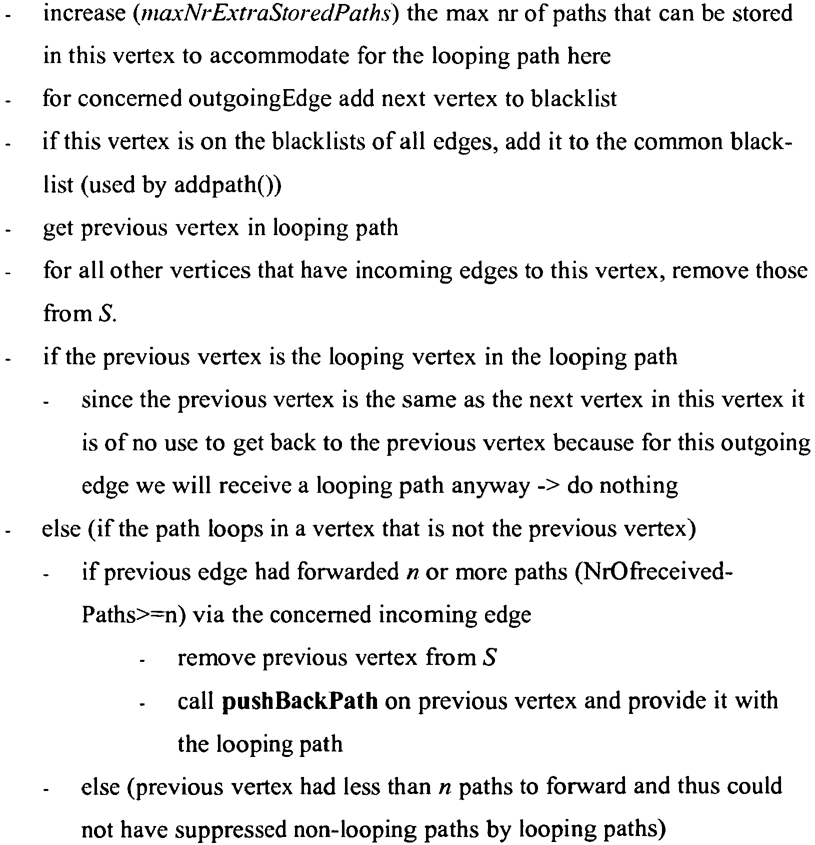 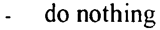 Vertex pushBackPath procedure where a looping path is received from the next vertex during a loopingPathFound call (it is assumed that the next vertex has received n or more paths from this vertex and discovered a looping path in it)
- get my corresponding outgoing edge to next vertex and
- get my incoming edge where 1 received this path from (if it exists, not for begin vertex)
- for all other incoming edges, remove the corresponding vertices from *S*.
- if my incoming edge has provided *n* or more paths (NrOfreceived-Paths>=n) from the previous vertex and if the previous vertex is not the looping vertex
   - increase maxNrExtraStoredPaths (to accommodate one new path)
   - add my vertex back to *S* (it will be thrown out of S when a new path is received anyway)
   - remove previous vertex from S
   - if this vertex is not the loopingvertex call pushBackPath on previous vertex
   - else do nothing
- if previous vertex did not pass n or more paths or if it is the looping vertex, then do nothing

In the pushBackPath procedure no more vertices are pushed back to then there are vertices in the loop.

Further embodiments of the method according to the invention, in particular specific steps thereof, will be explained with the following graphs. The graphs may represent a communication network, road network or the like.

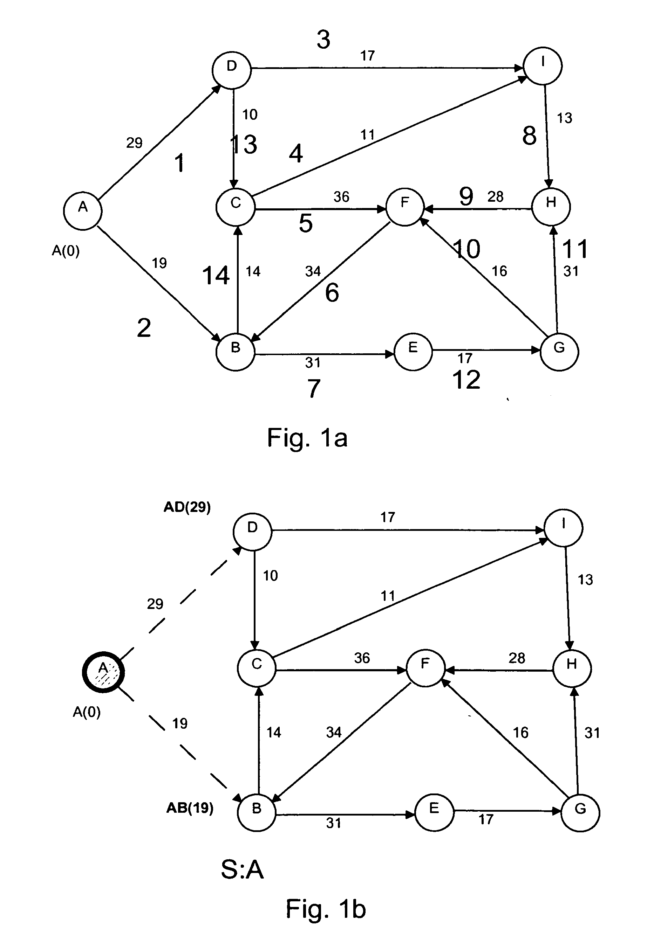

Fig. 1a shows a network that defines a graph. Each vertex has an alphabetic character. Each edge is labelled with a two numbers. The number with the greater font size indicates the number of the edge and the number with the smaller font size indicates the weight or the cost for traversing the edge. For example the costs from vertex A to vertex D via edge 1 are 29. The graph shows edges with directions. Therefore, an edge may be traversed only in one direction. The method according of the invention is also working with graphs having edges without directions. In the first embodiment, the number of shortest path to be found n may be not limited.

n paths are found by letting each vertex forward at most n paths through each of its edges. As one vertex may connect many incoming edges, i.e. edges that are directed to that vertex, there might be far more paths to choose from than n. Thus, only the n shortest paths with the lowest cost metric are forwarded. The procedure calculateNeighbours is invoked the same number of times as there are vertices. In case a vertex finds out during the procedure calculateNeighbours that a path will loop in the next vertex it will not call the addpath procedure on the next vertex, but it will also not take any more actions on looping paths. Thus, the method according to this embodiment will simply not store the looping paths in the path lists of the respective vertices. The first embodiment of the present invention typically works well on graphs that have edges pointing in a similar direction and the path from source to destination vertex is along the same direction (the flow in the graph). Viterbi coding trellis might be an example.

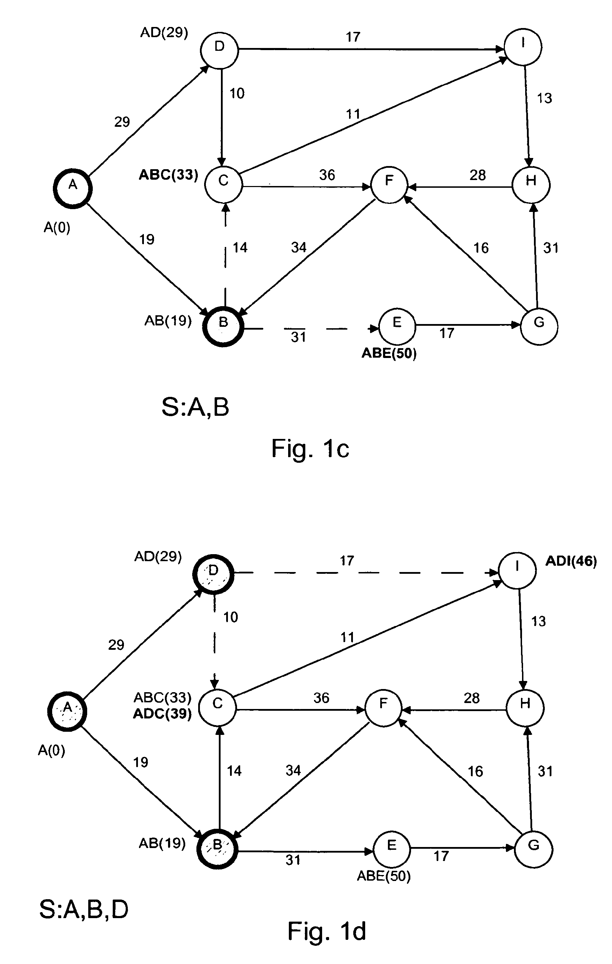

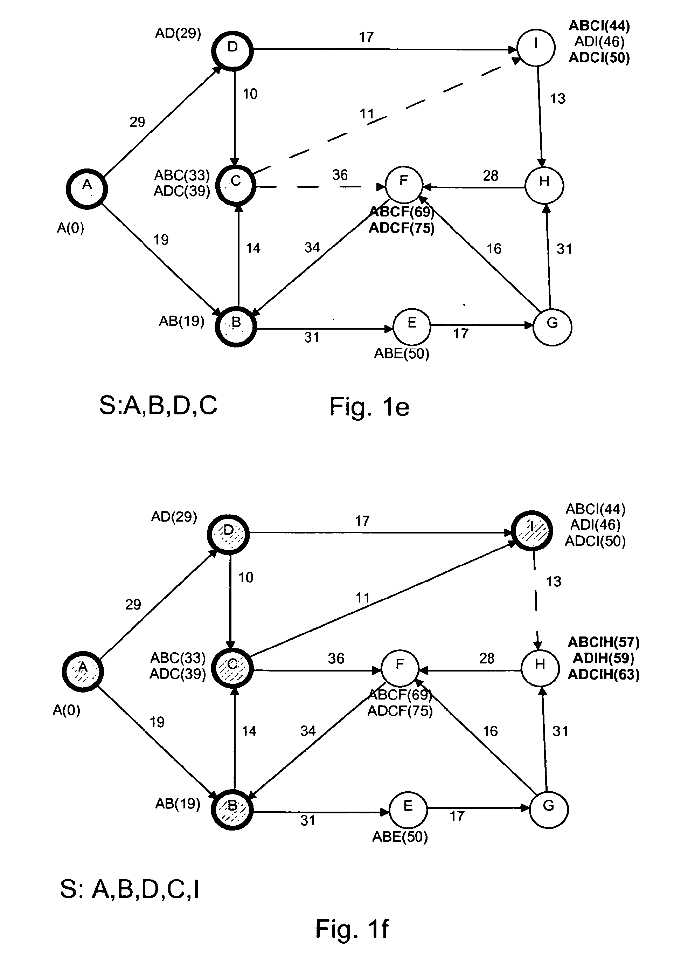

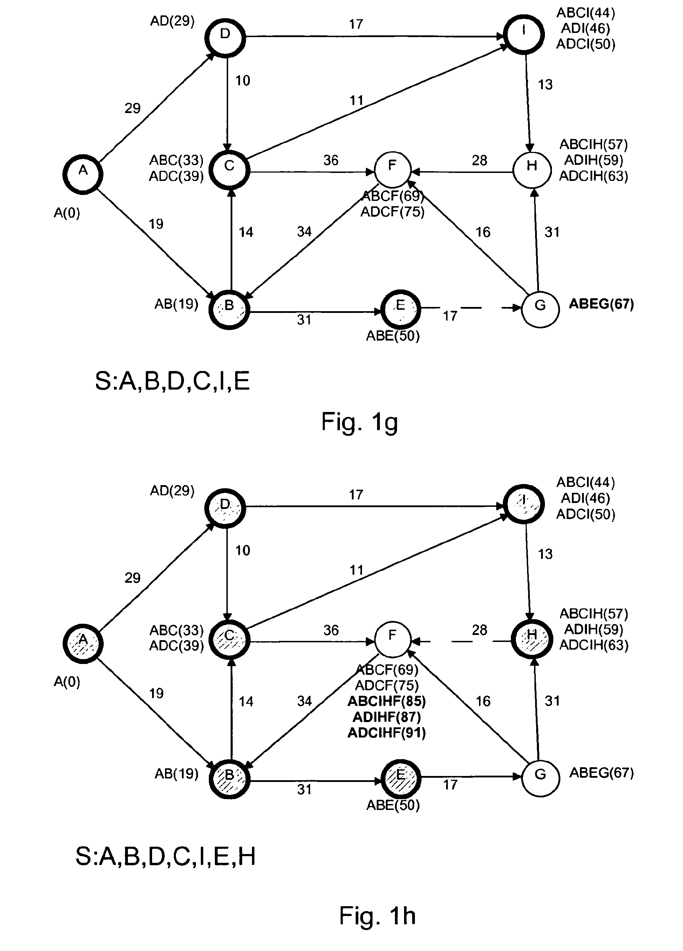

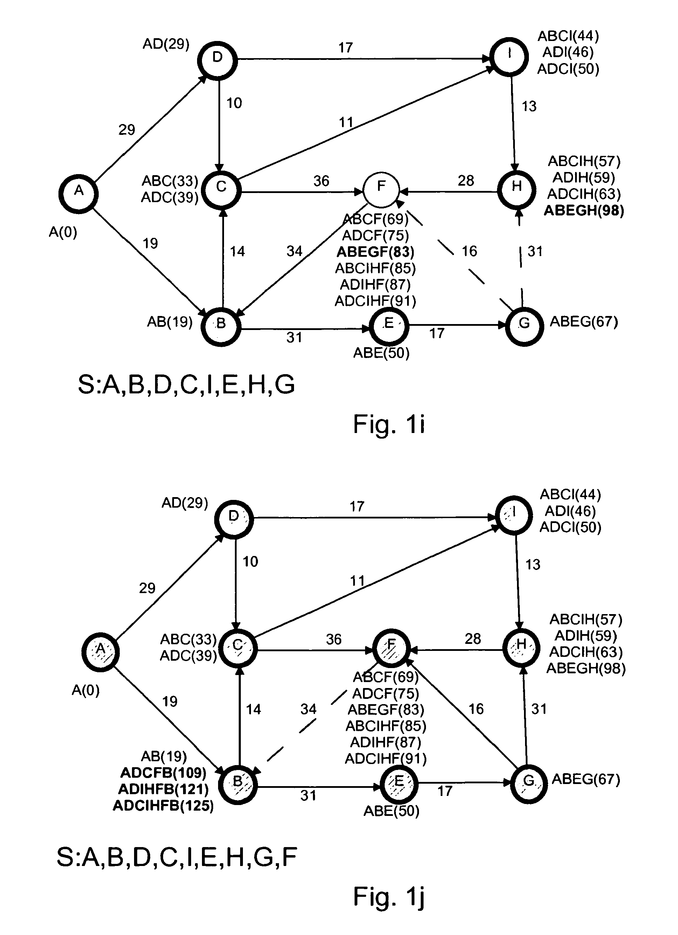

Referring now to Fig. 1a, graph G is shown. A shortest path vertices collection S is empty, and vertex A is assigned with the initial path with the costs of 0. The first vertex with the lowest costs is therefore vertex A. The procedure calculateNeighbours is called with respect to vertex A. In the graph of Fig. 1 only enabled edges are shown. Only the initial path is the path received by vertex A. In the next step, the paths from vertex A to vertex D appear in the path lists of vertex B and D, respectively and become reachable accordingly. This is shown in Fig. 1b. The added paths to the list of path of each vertex are shown in bold letters. In the brackets behind the path, the costs of the respective path are shown. The cost for the path AD is therefore 29 and the cost for the path AB are 19. Finally, vertex A is added to the shortest vertices collection S. For the sake of simplicity the vertices in the shortest path vertices collection S are hatched in the graph.

In the next iteration of the method, the lowest cost vertex is B, and the neighbouring vertices of vertex B are calculated. Vertex B forwards the incoming path AB to its neighbouring vertices C and E, such that the path lists of vertices C and E are updated. Finally, vertex B is added to the shortest paths vertices collection S. This is shown in Fig. 1c. The forwarding of the paths from the vertex with the minimum costs to its neighbouring vertices is shown with the dashed arrows in the figures.

In a further iteration of the method according to the first embodiment of the invention shown in Fig. 1d, the next lowest cost vertex that is reachable is vertex D. As in the previous iterations of the method, the incoming paths are forwarded to its neighbouring vertices C and I, and the path lists of the vertices C and I are updated. Vertex D is then added to the collection of the shortest paths vertices S. For each vertex, the method according to the present embodiment is storing the paths from the begin vertex A, and the corresponding costs. These values are used to determine which vertex will be the next lowest cost vertex in the next iteration. The next lowest cost vertex that is not in the collection of vertices with the shortest paths S is vertex C, as the costs to reach C via A and B are 33, which is lower than the costs 46 for vertex I or 50 for vertex E, respectively. Therefore C is selected, and forwards its incoming paths, namely the path ADC and the path ABC to its neighbour vertices F and I, respectively. The path lists of vertices F and I are updated and C is added to the collection of shortest vertices S, as shown in Fig. 1e.

In the next iteration of the method, vertex I is selected as lowest cost vertex, and the path list of vertex H is updated, as shown in Fig. 1f. Fig. 1g shows that vertex E is selected as the next lowest cost vertex, and the path list of vertex G is updated. The collection of the shortest path vertices contains then the following vertices: S: A, B, D, C, I and E.

The next two steps shown in Figs. 1h and 1i are analogue to the previous steps of the method according to a first embodiment of the invention. Thus the path lists of vertices F, G and H are updated and vertices G and H are added to shortest path vertices collection S.

In the method according to the first embodiment, vertices are only added to the shortest paths vertices collection and not removed. In particular it is visible that for example for vertex G only a single path was found and not several paths.

Thus, in the following, further embodiments of the method according to the invention are explained in which the order or sequence of traversing the vertices when performing the previous embodiment of the method may be less dependent on the graph and how the collection of shortest path vertices S is filled.

Therefore, a further embodiment of the method according to the invention is provided. In this method, a vertex can be removed from the collection of shortest vertices S. This is the case if a new path is added to the path list of the vertex that is already in the shortest path vertices collection S. A new path means that the path is added in a another iteration of the method of the invention. As long as new paths will be found, vertices will be deleted from the collection of shortest vertices S.

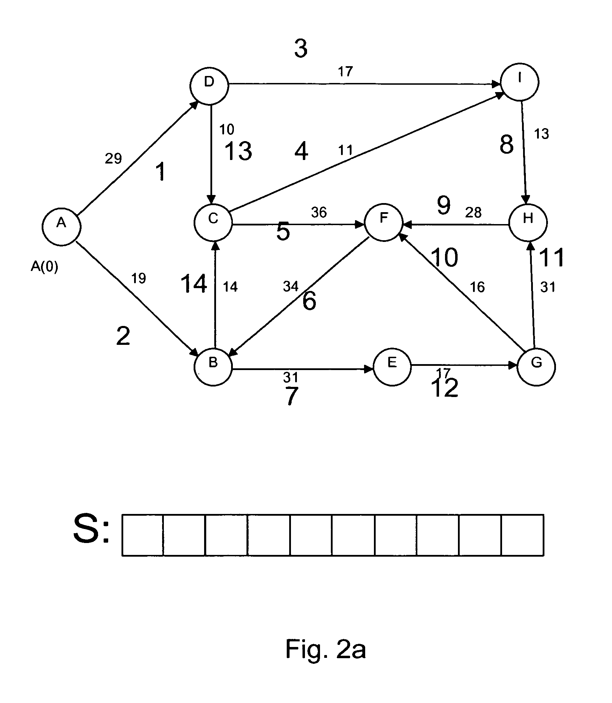

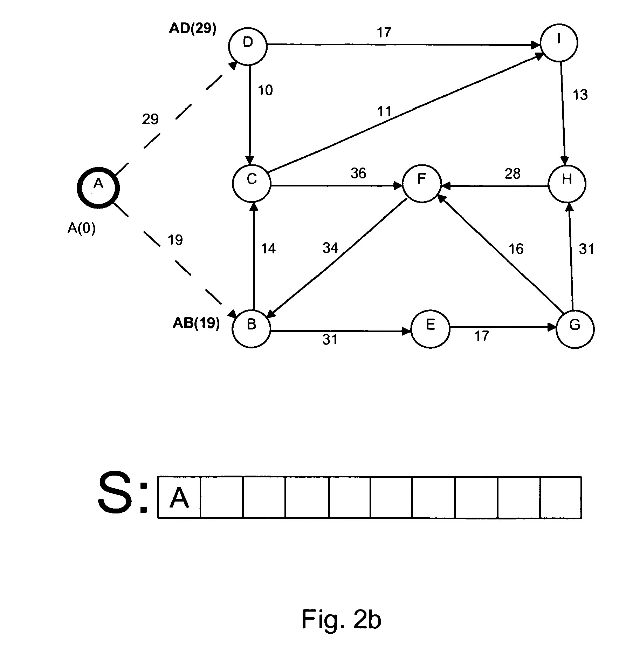

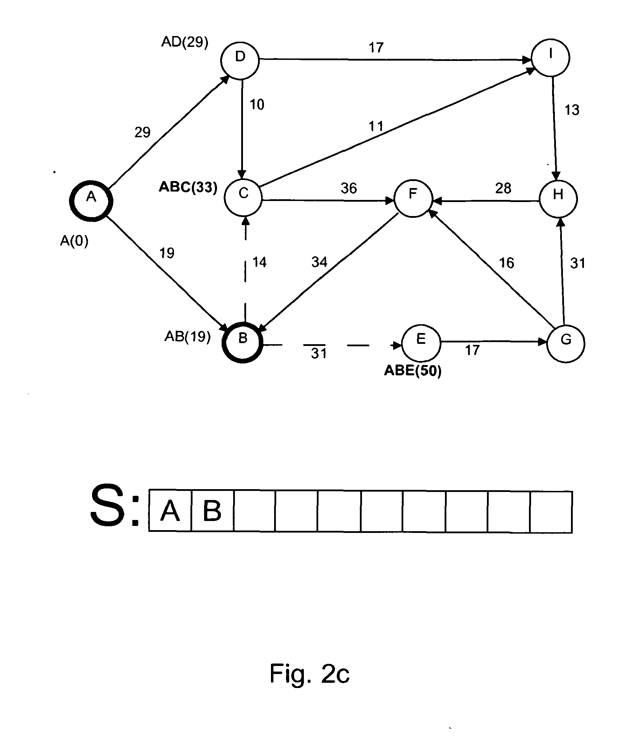

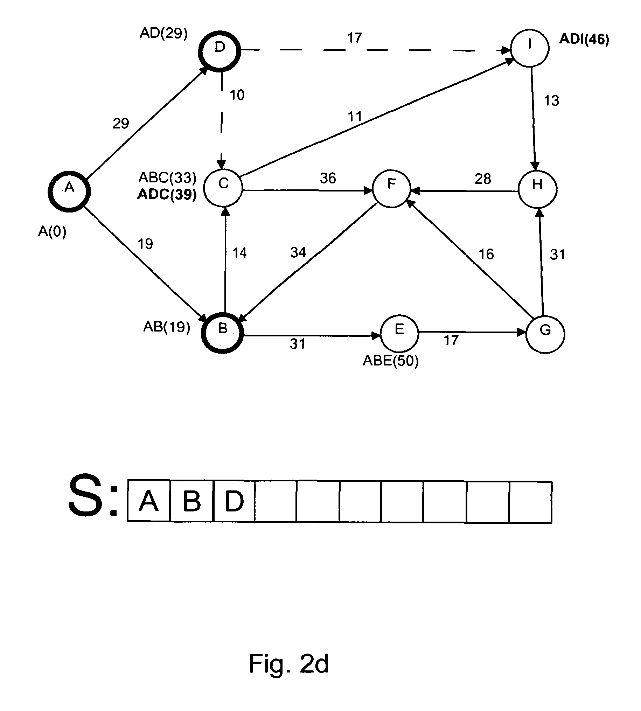

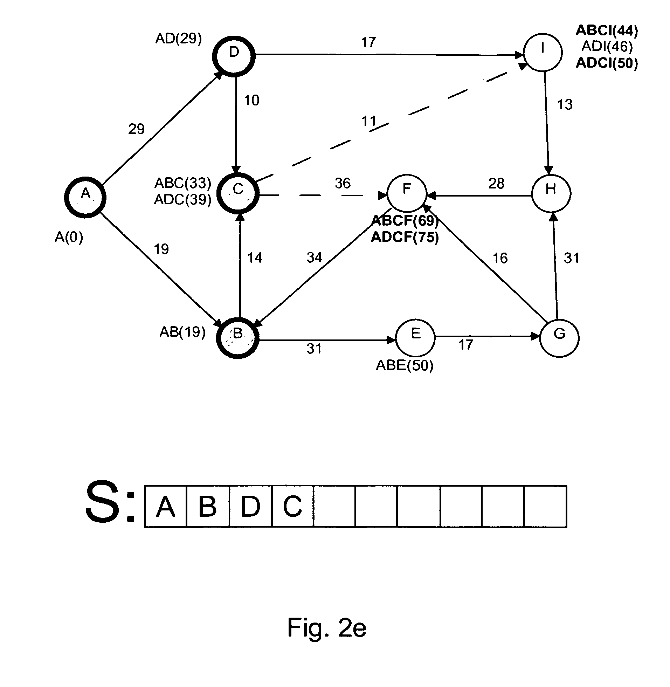

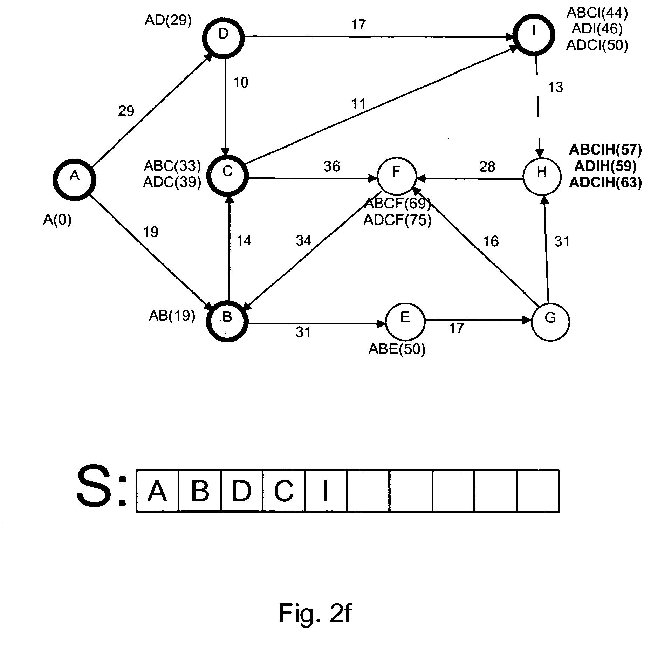

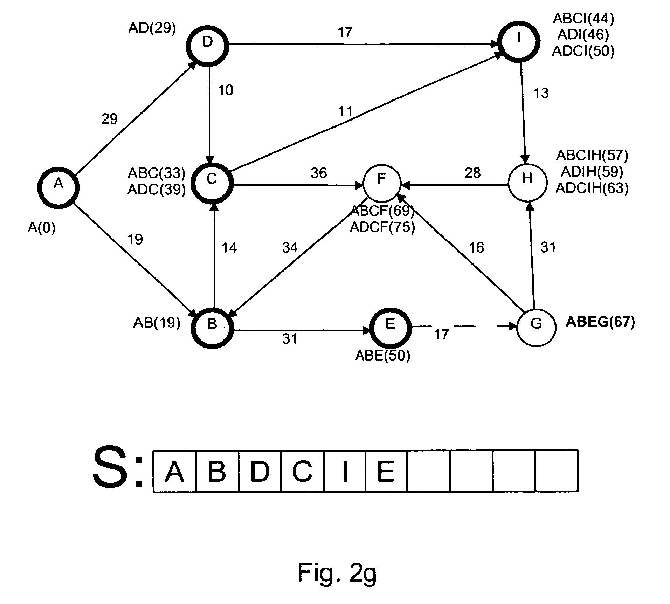

This will be explained with respect to Figs. 2a to 2p.

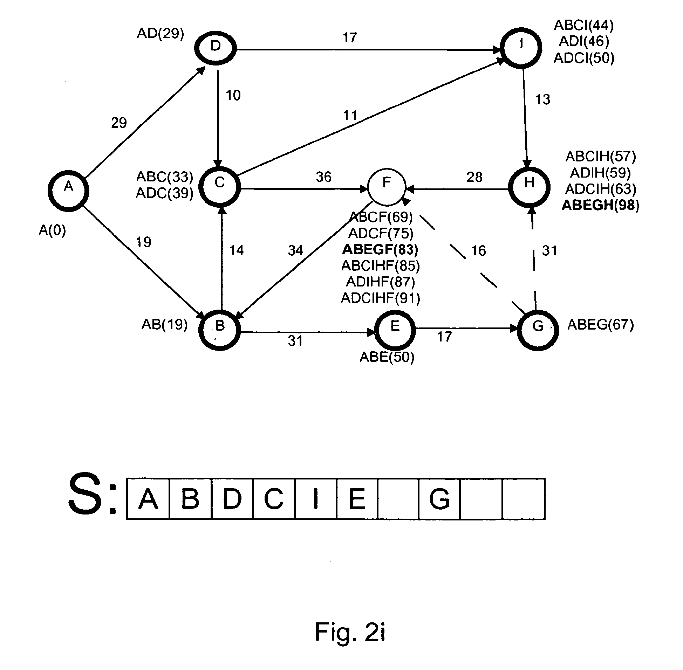

For the sake of simplicity the same graph as in Fig. 1a is used. The method according to this embodiment is in steps shown in Figs. 2a to 2h identical to the steps of the previous explained embodiment of the invention shown in Figs. 1a to 1h. Therefore, the explanation will continue with Fig. 2i. In the iteration of Fig. 2i, vertex G is chosen as lowest cost vertex and the paths are forwarded along the outgoing edges to the vertices F and H. The path ABEGF is added to the path list of vertex F and the path ABEGH is added to the path list of vertex H. As vertex H was already in the shortest path vertices collection S, vertex H will be removed from S, as a new path, namely the path from vertex G, reaches the vertex H.

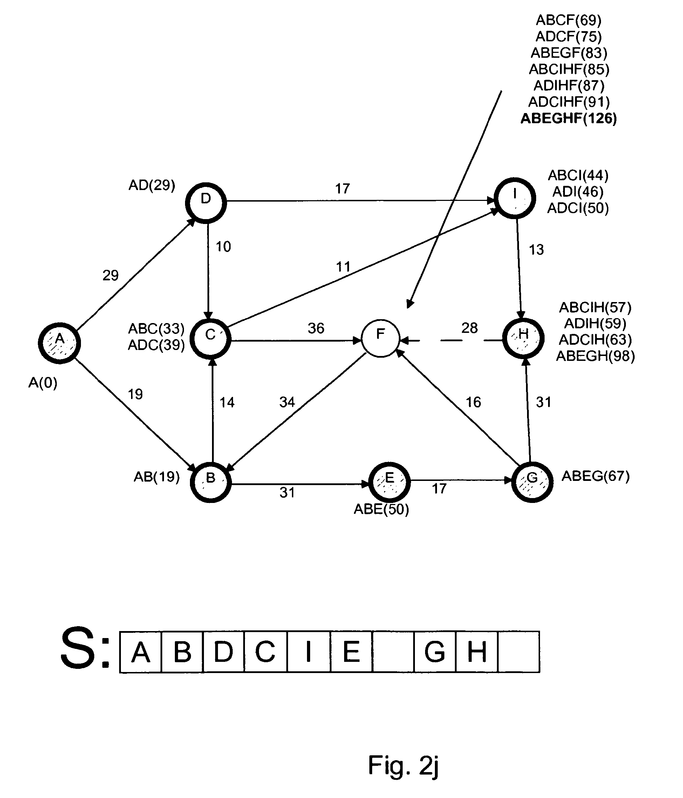

In the next iteration, shown in Fig. 2j, vertex H is again chosen as lowest cost vertex. The path list of the only neighbouring vertex F is updated. Finally, vertex H is again added to the shortest path vertices collection S.

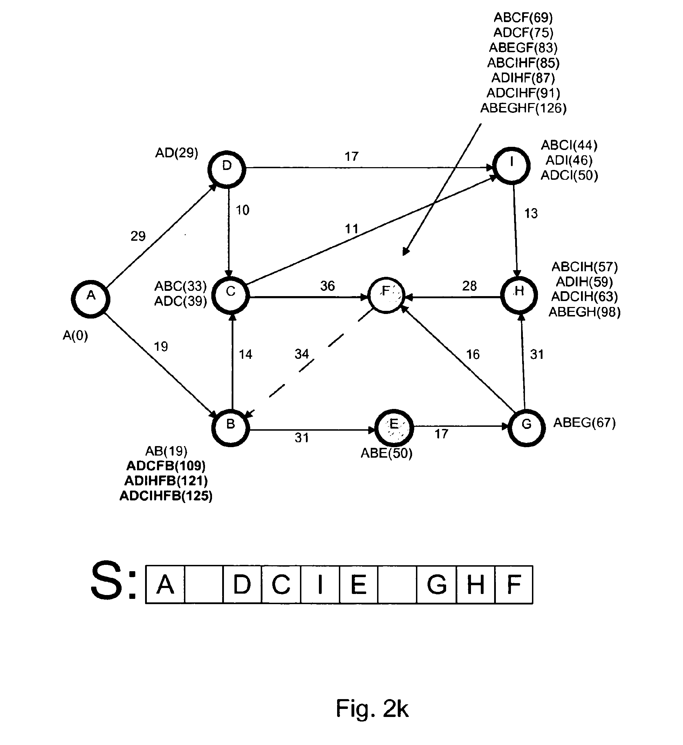

The next iteration, shown in Fig. 2k, the reachable shortest path vertex is vertex F. The only neighbouring vertex B is removed from the shortest path vertices collection S and three new paths are added to the shortest path list of vertex B.

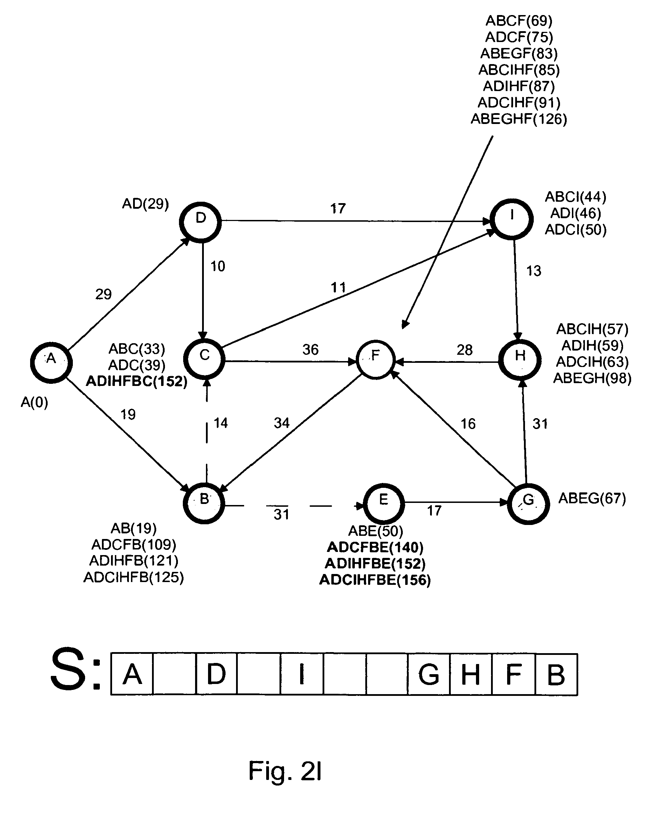

Fig. 2l shows the next iteration of the method according the present embodiment of the invention. Vertex B is chosen as lowest cost vertex and its neighbouring vertices C and E are deleted from the shortest path vertices collection S, as both vertices C and E were already in S. The path lists of vertices C and E are updated and finally vertex B is added to S.

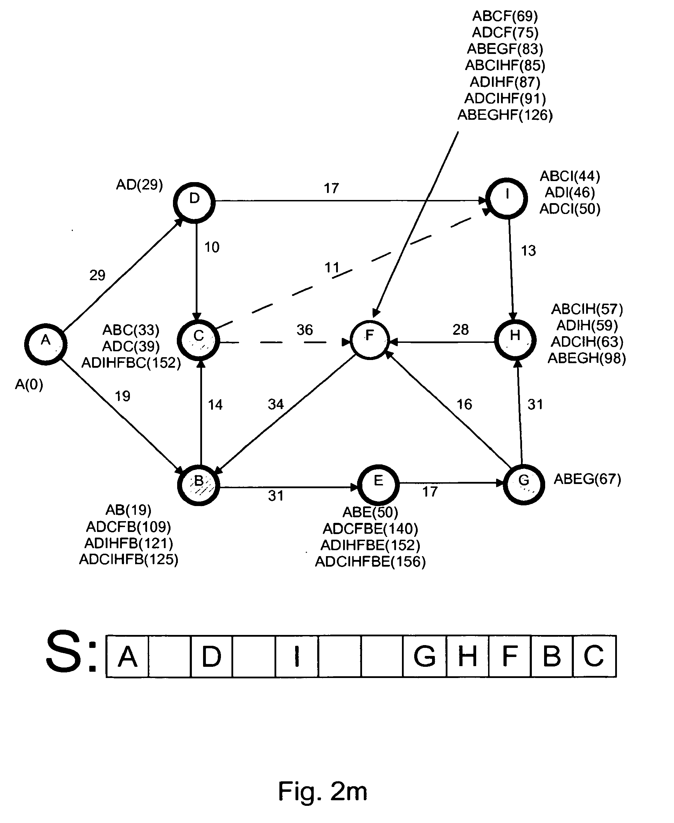

In Fig. 2m, vertex C is chosen as lowest cost vertex. The paths are forwarded to the neighbouring vertices F and I. All (new) paths forwarded to vertices I and F are looping path, such that neither F nor I is receiving a new path, such that vertices I and F are not removed from the shortest path vertices collection S.

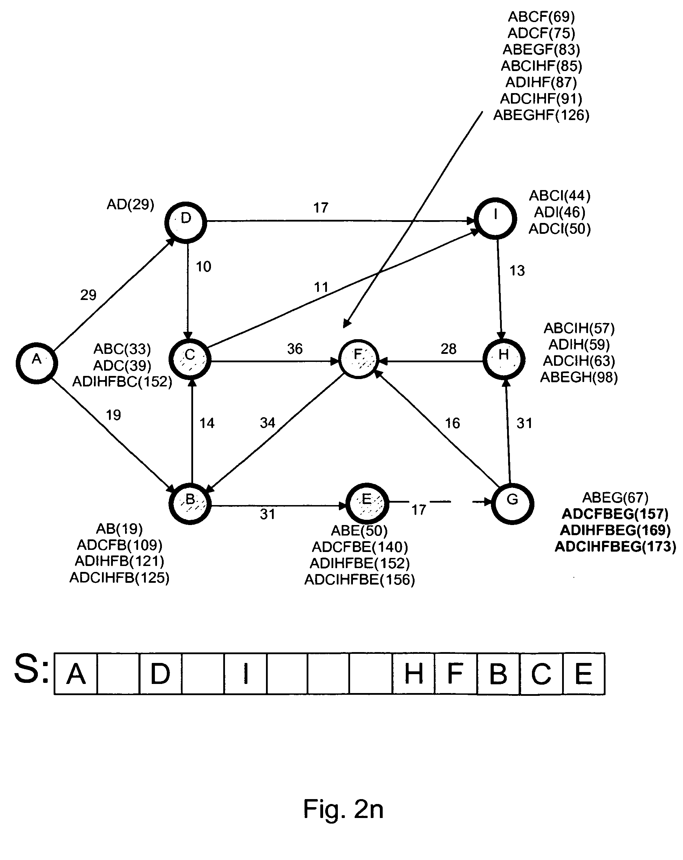

In the next iteration, vertex E is chosen as lowest cost vertex and the paths are forwarded to vertex G. Three new paths are added (in bold) to the path list of vertex G. Vertex G is deleted from the shortest path vertices collection S, and vertex E is added again to S as it can be seen in Fig. 2n.

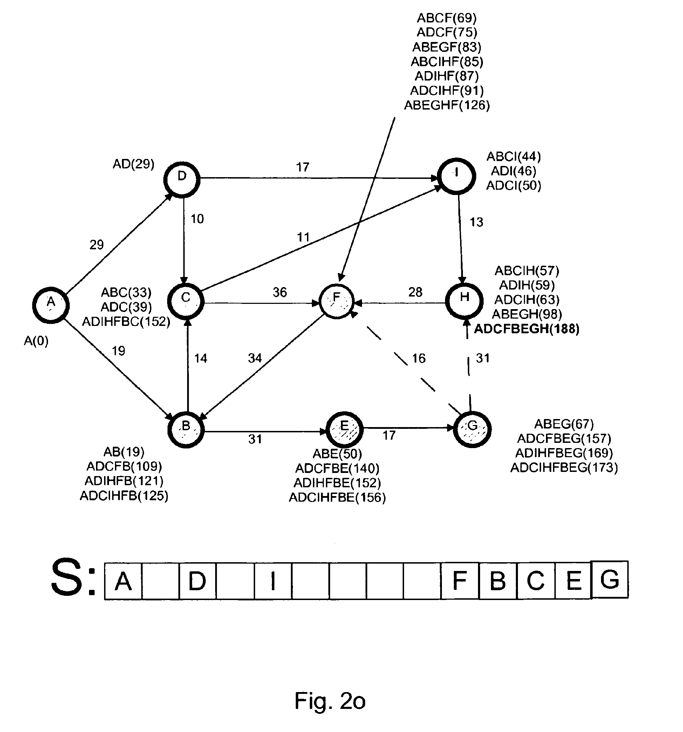

In the next iteration, shown in Fig. 2o, vertex G is chosen as lowest cost vertex and the paths are forwarded to its neighbouring vertices F and H. The path list of vertex H is updated and vertex G is again added to the shortest path vertices collection S.

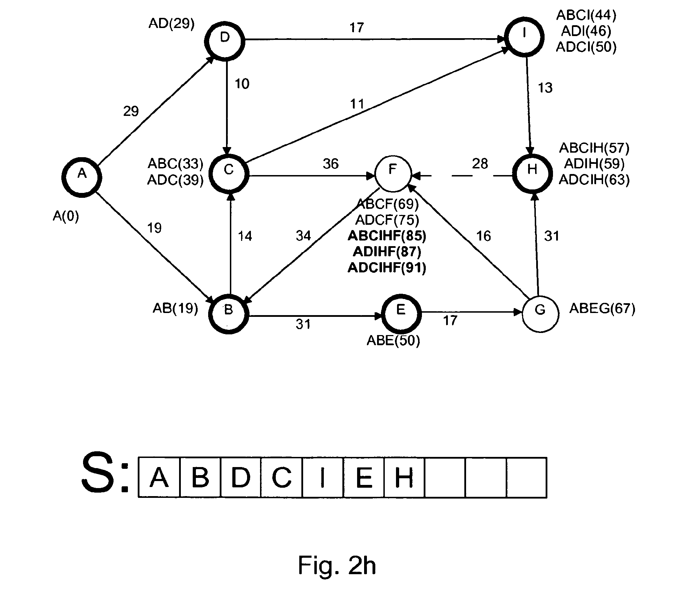

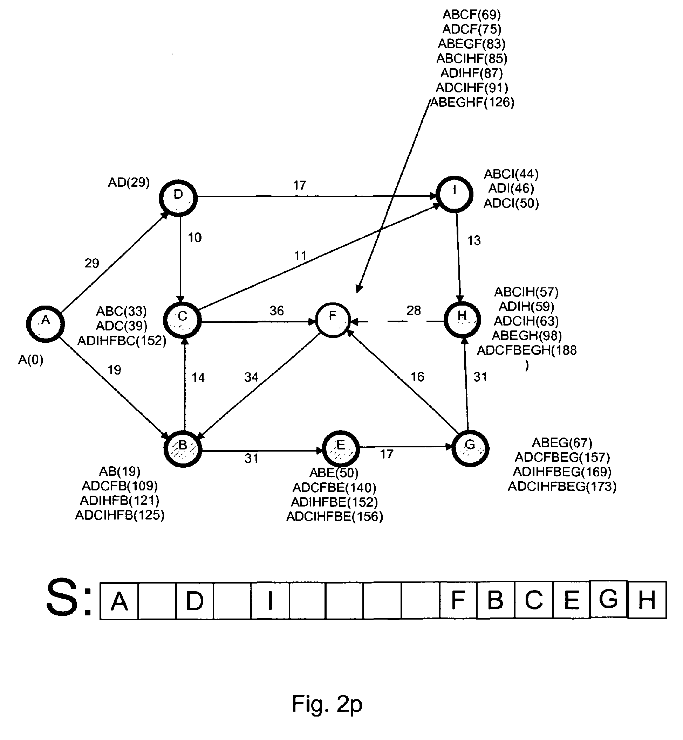

In the last iteration, shown in Fig. 2p, H is again chosen as lowest cost vertex and the paths are forwarded to its neighbouring vertex F. As no new paths arrive at vertex F are added to the path list of vertex F, vertex F is not deleted from the shortest path vertices collection S. Thus, the method according to the invention stops, as all reachable vertices have been added to the shortest path vertices collection.

With the method according to the embodiment shown in Figs. 2a to 2p the maximum number of non-looping paths in a graph is found. The looping paths are automatically eliminated when a vertex discovers that a path loops in the next vertex.

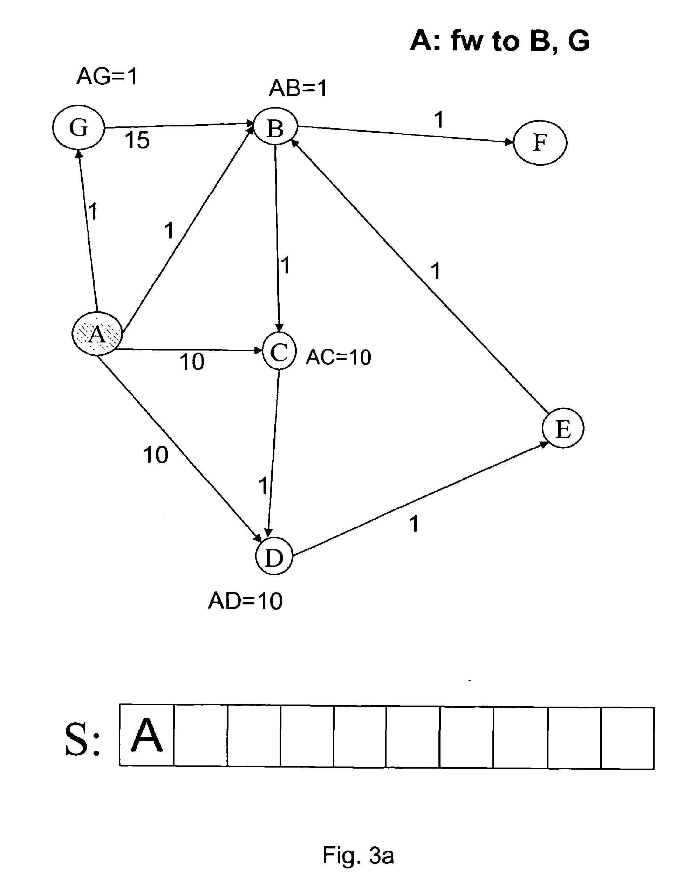

In a further embodiment of the invention that will be explained in conjunction with Figs. 3a to 3l, the method will limit the number of the shortest paths to be found below the maximum number of paths in a graph from a source, in the case of the sample shown in the Figs. 3a to 3l vertex A, to a destination, here: vertices B, C, D, E, F and G. In this case, looping paths may cause non-looping paths not to propagate when the looping path (this may appear later) has a lower cost at some vertex.

Therefore, in this embodiment it is determined if a looping path has taken precedence over another non-looping path, which can only happen at a vertex that has more than n paths available to forward to the next vertex and has multiple incoming edges like vertices B, C and D in the example of Figs. 3a to 3l. It is important to note that if the same path is forwarded through one outgoing vertex it may not be looping and at another it might start to loop. This is why a vertex will store an additional path (n+1) for each looping path forwarded and where it is aware of, which is not necessary when all outgoing edges have detected this path as looping.

Therefore, a pushback procedure, e.g. the one listed above in the pseudo code, will start near the end of a loop and work its way back along the path as long as this looping path might have suppressed other paths. The pushback procedure will not be invoked before the looping vertex, which is stated two times in a looping path, as the suppression is only relevant in the loop.

The embodiment explained in conjunction with Figs. 3a to 3l will may use the complete pseudo code listed above in contrast to the examples explained in conjunction with Figs. 1a to 1j and 2a to 2p.

For the sake of simplicity, a less complex graph is used in Figs. 3a to 3l. Costs of the edges are indicated adjacent to the edges. This graph illustrates how the method deals with loops when the number of shortest path to find is set to two, thus n=2, and therefore gets below the maximum number of paths between the source vertex (A) and the vertex (F).

Actions that are taken are indicated in bold font in the figures. The source or begin vertex is vertex A. A basic idea of this embodiment is that looping paths might suppress non-looping alternatives that have a higher cost metric associated with the edges. The weights will cause the looping path to prevail over one of the two non-looping paths from vertex A to vertex F.

In a first step, the method starts to find the two shortest paths through the shown graph. All vertices are made unreachable and have their "maxNrExtraStoredPaths" set to 0. Additionally, the shortest path vertices collection S is emptied. All vertices in the graph have their common blacklist emptied and all edges in the graph also have their blacklist emptied. Further, vertex A is made reachable and is provided with one path object of cost 0.

The "reachable and lowest cost vertex {MINCOSTVERTEX} that is not in *S*" will yield vertex A as shown in Fig. 3a. The lowest cost vertex is hatched in Fig. 3a. Also in the following figures, the actual lowest cost vertex will be hatched. Then, the neighbours of vertex A are calculated, for example using the procedure "calculate neighbours" that is invoked on vertex A:

In a next step, for all outgoing edges of vertex A "provide *n* non looping paths to a maximum of the nr of available paths ". Further, the additional paths are added to the list of paths of vertices B, C, D and G, e.g. by calling addpath procedures of vertices B, C, D and G and forwarding the paths from vertex A. Finally, vertex A is added to the lowest cost path vertices collection S.

The paths of a path list of a each vertex are indicated adjacent to the respective vertices in the following figures. Costs of each path are indicated in the brackets and may also be stored in the list of paths.

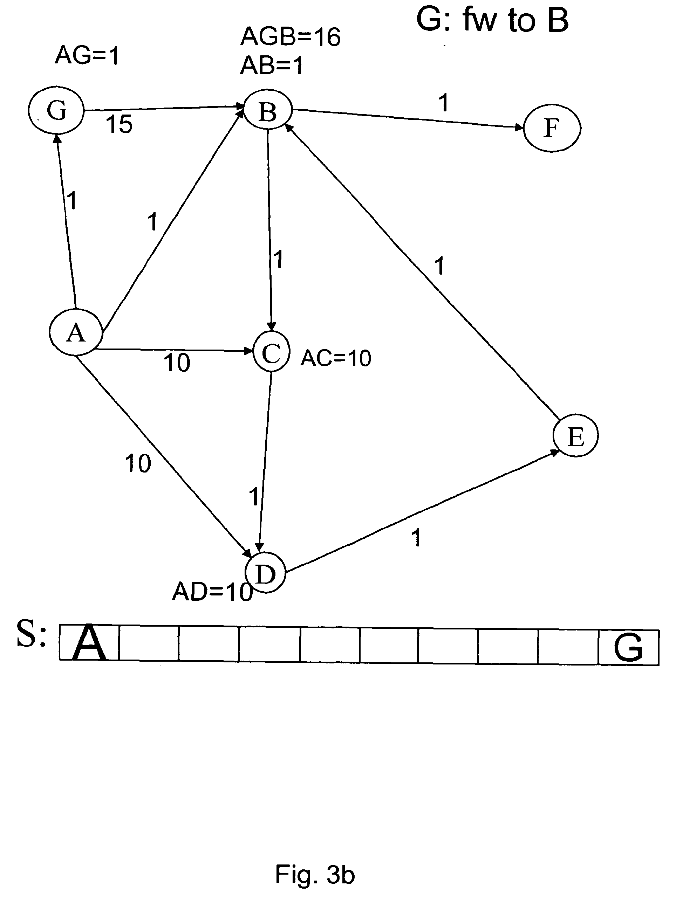

In the next iteration of the method according to the present embodiment shown in Fig. 3b, vertex G is selected as vertex with the minimum costs. It could also have been vertex B as both vertices have the cost 1 when they are reached from the begin vertex A. New paths are added to vertex B, e.g. by calling the addpath procedure on vertex B and adding the path AGB with its costs of 16 to the path list of vertex B.

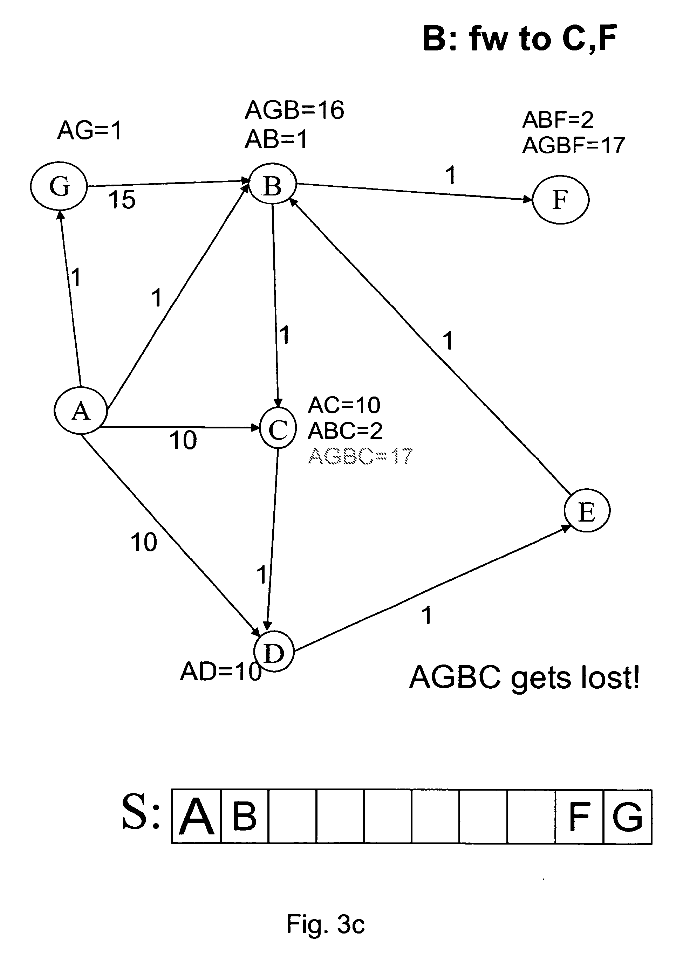

In the next iteration shown in Fig. 3c, vertex B is the vertex with the minimum costs and is propagating its path to vertices C and F. Thus, the paths ABC and AGBC are added to the path list of vertex C, but only the two shortest paths will be accepted when the paths are added to the path list of vertex C, e.g. using the addpath procedure of vertex C that only accepts the n shortest paths, i.e. in this case only the two shortest paths. The path AGBC has a metric 17 which is greater than the metric 10 for the path AC and the metric 2 for the path ABC. Therefore, the path AGB forwarded to C will be dropped.

Since a calculateNeighbours procedure of vertex F will not be relevant for the explanation of the method according to the invention, it is not selected in this example as vertex with the minimum costs when it is the vertex with the minimum costs. For the sake of simplicity of the description of the present invention vertex F is added to the shortest path vertices collection S without a detailed explanation.

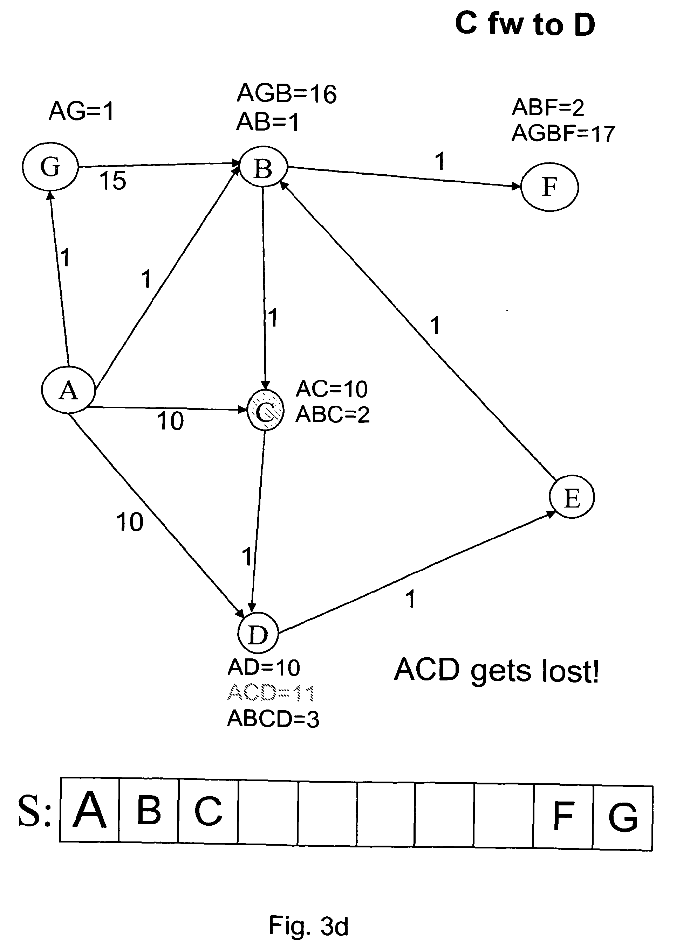

In the next iteration shown in Fig. 3d, vertex C is chosen as lowest cost vertex. It propagates its paths to vertex D. As the vertex D has now more than two paths in its path list, the path with highest costs, namely the path ACD, will be deleted from the list.

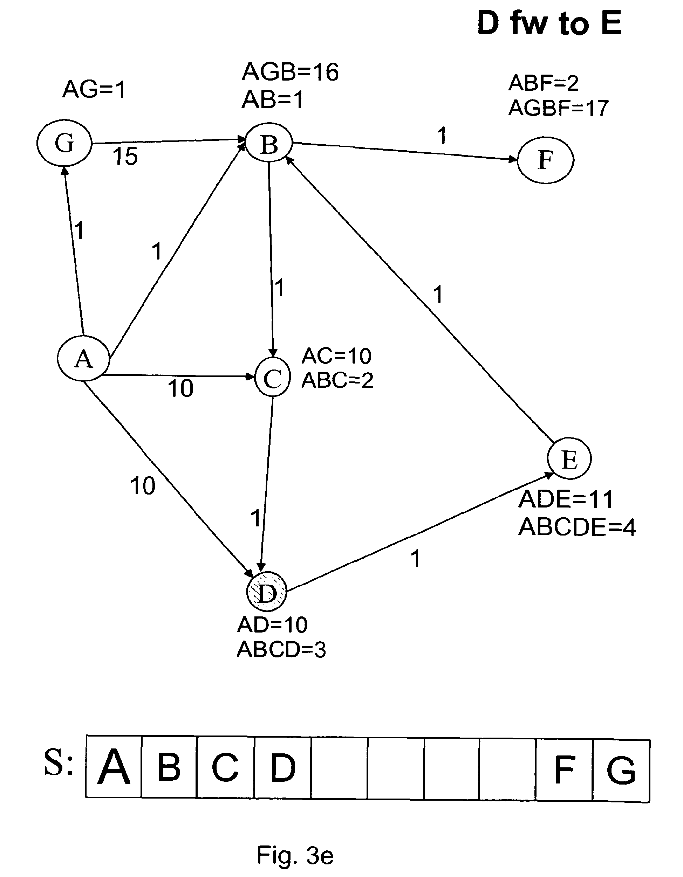

The next lowest cost vertex chosen is vertex D as it can be seen in Fig. 3e. Vertex D forwards two paths to vertex E. Thus, two paths are added to the path list of vertex E.

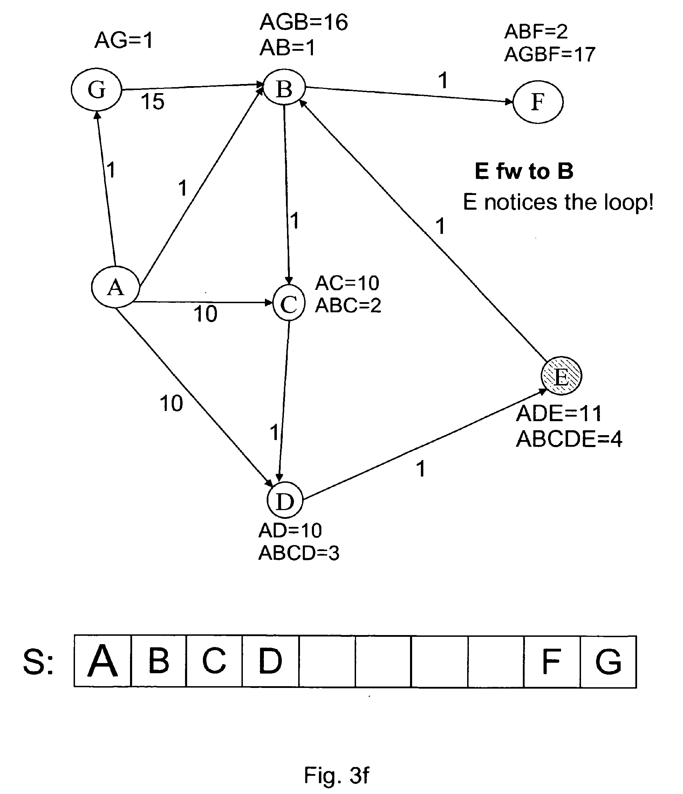

In the next iteration of the method, vertex E is chosen as lowest cost vertex, see Fig. 3f. The paths from vertex E are forwarded to vertex B. As the path ABCDE is forwarded to B, two times the vertex B is in the path and the vertex E notices that a loop exists. Therefore a looping path found procedure is started as it will be explained in conjunction with the following figures.

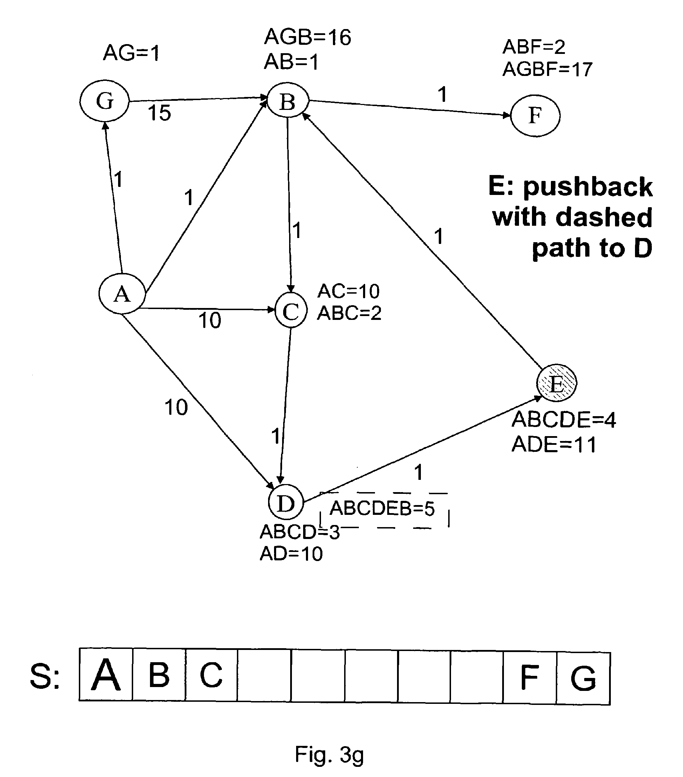

As it is shown in Fig. 3g the looping path ABCDEB is pushed back from the vertex E to vertex D. Further, maxNrExtraStoredPaths on Vertex E is incremented to accommodate n+1 paths in Vertex E (this should not be strictly necessary for vertices having one outgoing edge).

If vertex E would have had other incoming edges the corresponding vertices should be removed from S.

Vertex E adds vertex B to a blacklist of its outgoing edge to vertex B, vertex B will also be added to the common blacklist of vertex E. This means, that paths forwarded by vertex D should not contain vertex B.

Since the looping path is received from vertex D and it has forwarded n (2) or more paths, the looping path may have suppressed another non-looping path. Vertex D is removed from the shortest paths vertices collection S.

Then, the pushBackPath procedure is invoked on vertex D and the looping (dashed) path is provided at the call of the procedure.

In the following the Pushback procedure on vertex D will be explained:
Vertex D identifies that it has received n or more paths from vertex C. Maybe vertex C had more non-looping paths to forward. All other vertices that have edges towards vertex D are removed from the shortest path vertices collection S, which in this case is vertex A. Then, vertex D will allocate one more extra path (maxNrExtraStoredPaths is incremented) to receive to accommodate one non-looping path that can be forwarded instead of ABCDEB. Then, vertex C is removed from the shortest path vertices collection S. In the following the "pushBackPath" procedure is invoked on vertex C:
Since vertex D has not stored more than n, in this case two paths, it is not needed to have vertex D out of S anymore. If there are more paths to forward from other vertices, D will be thrown out of shortest paths vertices collection S upon receiving those new path(s) in the addpath procedure.

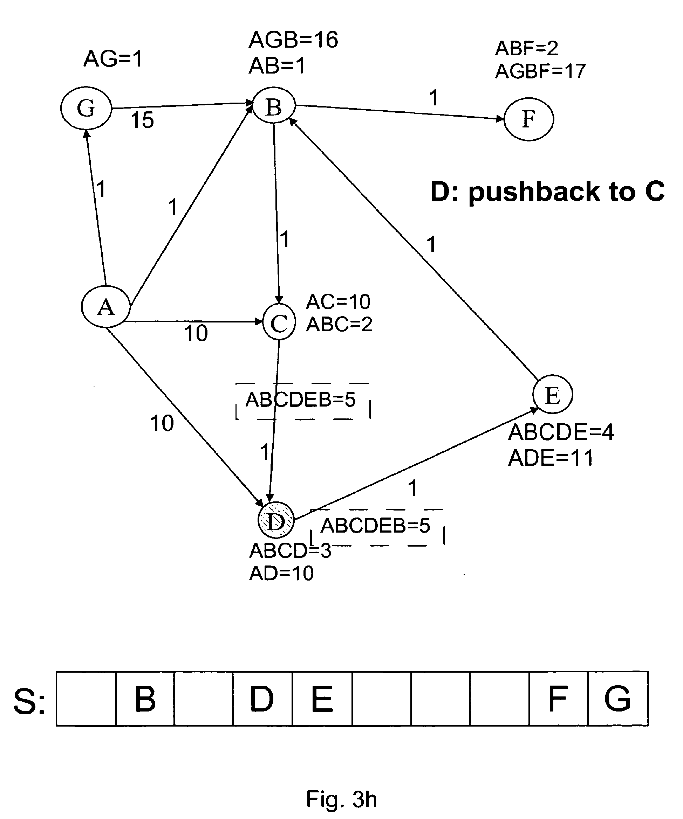

In the following the pushBackPath procedure on vertex C will be explained (see Fig. 3h):
Vertex C discovers that it has received n paths from vertex B, where it got the looping path from. Vertex B is the looping vertex in path ABCDEB, there is no need to verify if more paths could have been passed through vertex B because all of them would loop in vertex B. All other vertices that have edges towards vertex C are removed from the shortest path vertices collection S, which in this case is vertex A, but it was removed from S earlier. Therefore, vertex C does nothing. The end of pushBackPath will close the calculateNeighbours procedure that was originally invoked on vertex E shown in Fig. 3g. Finally, vertex E is added to shortest path vertices collection S.

Then, vertex A is selected as vertex with the minimum costs, but this is not shown in the example as vertex A has no new paths to add to vertices B, G, C, D and will therefore be added to the shortest path vertices collection S again.

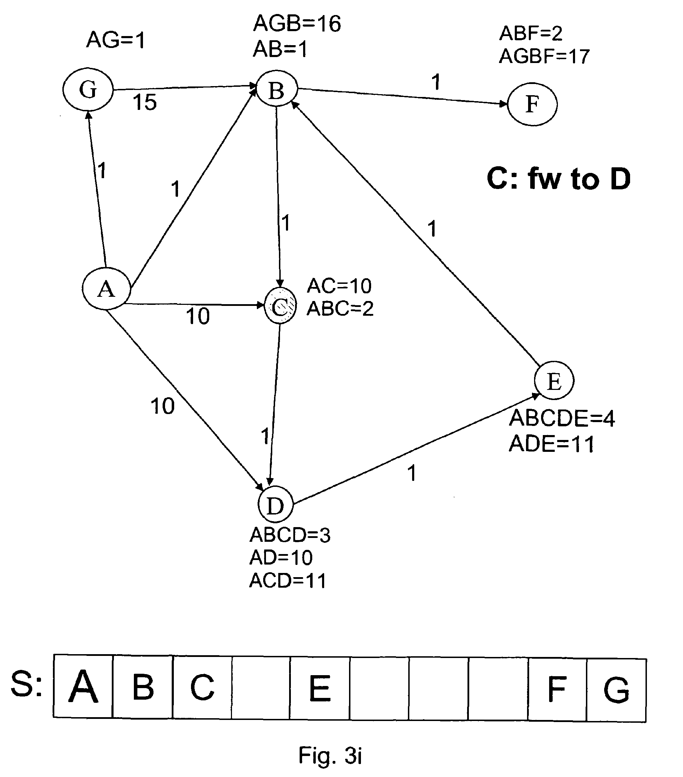

Then, vertex C is selected as vertex with the minimum costs, as shown in Fig. 3i. The procedure calculateNeighbours is invoked on vertex C. Then, vertex C forwards the same n paths again to vertex D. Vertex D is deleted from the shortest path vertices collection S, as it has received a new path (ACD) and now stores n+1 paths, in this example three paths.

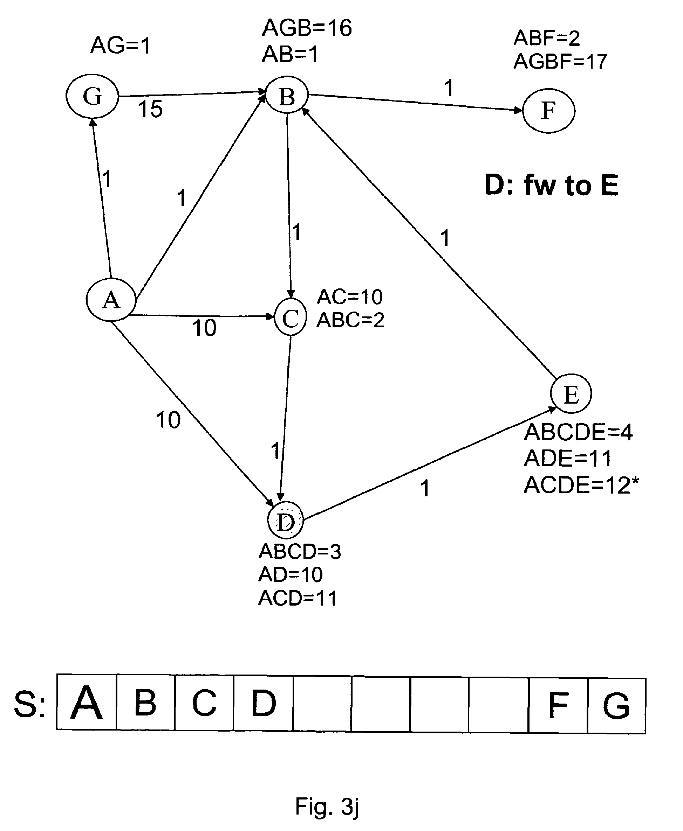

In the next iteration, vertex D is selected as vertex with the minimum costs as shown in Fig. 3j, and its neighbours are calculated, such that vertex D forwards the same n paths again to vertex E. Vertex E is deleted from the shortest path vertices collection S since it received a new path and now stores three (n+1) paths.

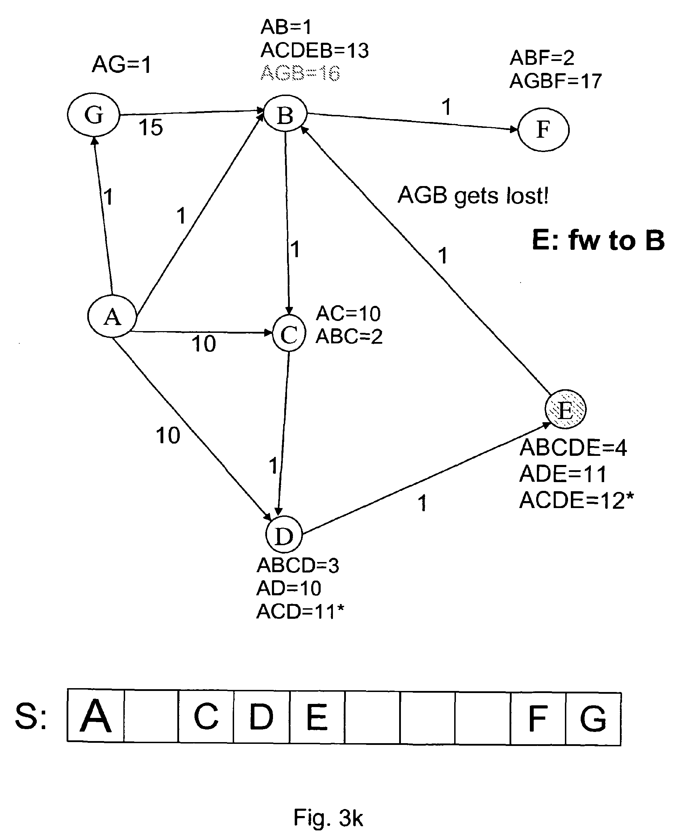

In the next iteration, shown in Fig. 3k, vertex E is selected as vertex with the minimum costs and the neighbours of vertex E are calculated, invoking the calculateNeighbours procedure on vertex E. In the procedure, vertex E forwards n, i.e. 2, non-looping paths to vertex B because the blacklist on the outgoing edge refuses path ABCDE as it contains the blacklist vertex B. Vertex B is deleted from the shortest path vertices collection S as vertex has received a new path via vertex E.

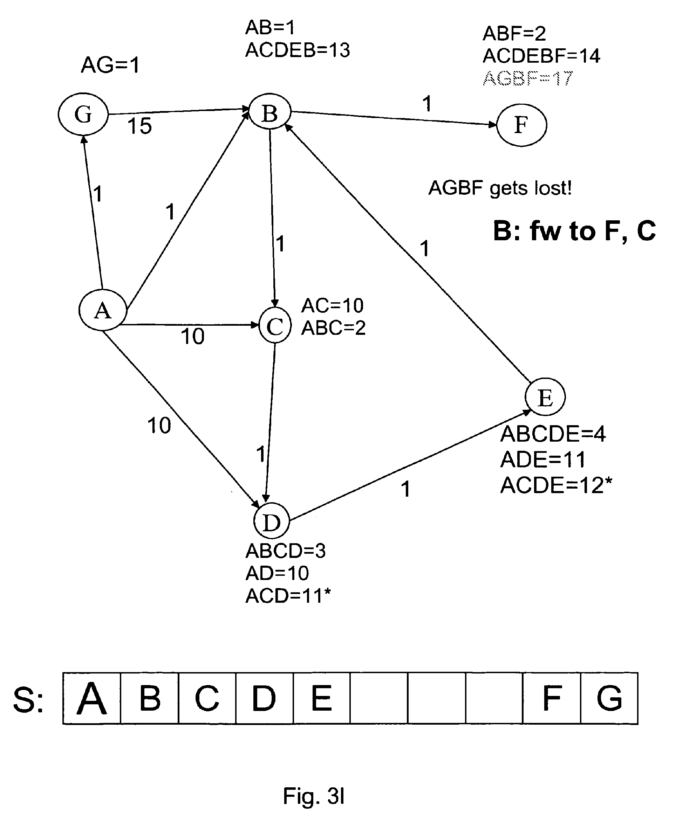

As shown in Fig. 3l, vertex B now forwards the paths to vertices F and C. Vertex C stays in the shortest path vertices collection S since it does not receive new non-looping paths. Vertex F replaces the AGBF path by ACDEBF because it has less cost associated with it. The n (two) paths eventually stored in F will be ABF and ACDEBF. Vertex F is not traversed for simplicity.

This written description uses examples to disclose the invention, including the best mode, and also to enable any person skilled in the art to make and use the invention. The patentable scope of the invention is defined by the claims, and may include other examples that occur to those skilled in the art.

### ANNEX:

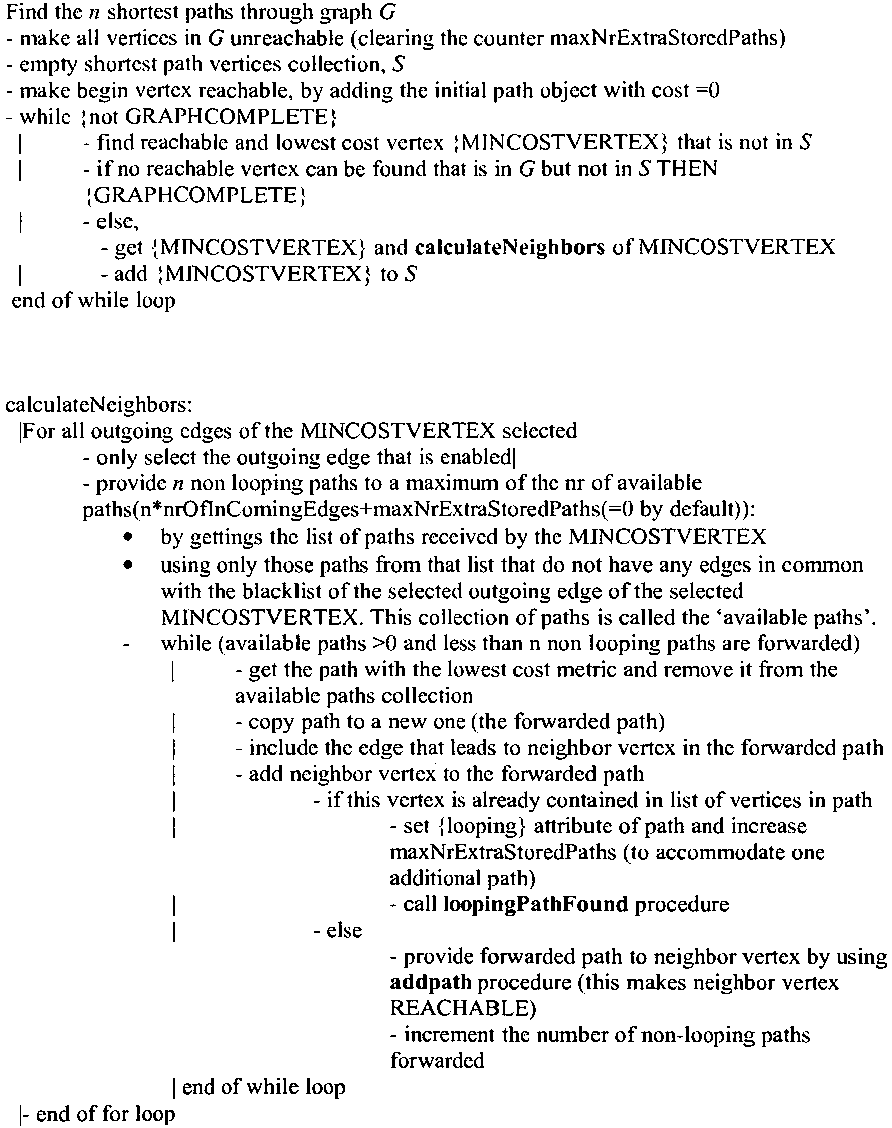

Vertex addpath procedure, where vertex receives a non-looping path via a certain incoming edge
- If *all* blacklists (one per edge, empty by default) of outgoing edges have an vertex in common that is present in this path-> ignore this path.
- if the same path has not been received
   o if vertex (this) is already in *S* -> remove vertex (this) from *S* (this will cause this vertex to be selected again as MINCOSTVERTEX and to have its available paths forwarded that would otherwise not have propagated)
   o increase *nrOfreceivedPaths* on incoming edge (not for beginvertex)
   o add path to vertex's list of paths, *LP*
   o [optional: apply constraints on path]
   o if *LP>n*incomingEdges* + *maxNrExtraStoredPaths* (not for beginvertex)
      ■ remove most costly path

Vertex loopingPathFound procedure, where vertex has detected looping path during calculate neighbor call
(The looping vertex is always the next vertex as the path would have been detected as looping otherwise in an earlier stage)
- increase the max nr of paths that can be storedin this vertex to accomodate for the looping ones here
- for concerned outgoingEdge add next vertex to blacklist
- if this vertex is on the blacklists of all edges, add it to the common blacklist (used by addpath())
- if this outgoingEdge is the only one that did not have the next vertex in the blacklist, then add next vertex to blacklist of the concerned incoming edge.
- get previous vertex in looping path
- if the previous vertex is the looping vertex in the looping path
   o since the previous vertex is the same as the next vertex in this vertex it is of no use to get back to the previous vertex because for this outgoing edge we will receive a looping path anyway -> do nothing
- else (if the path loops in a vertex that is not the previous vertex)
   o if previous edge had forwarded *n* or more paths (NrOfreceivedPaths>=n) via the concerned incoming edge
      o remove previous vertex from *S*
      o call pushBackPath on previous vertex and provide it with the looping path
   o else (previous vertex had less than *n* paths to forward and thus could not have suppressed non-looping paths by looping paths)
      o do nothing

Vertex pushBackPath procedure where a looping path is received from the next vertex during a loopingPathFound call
(it is assumed that the next vertex has received n or more paths from this vertex and discovered a looping path in it)
- get my corresponding outgoing edge to next vertex and
- get my incoming edge where I received this path from (if it exists, not for begin vertex)
- if my incoming edge has provided *n* or more paths (NrOfreceivedPaths>=n) from the previous vertex and if the previous vertex is not the looping vertex
   o increase maxNrExtraStoredPaths (to accommodate one new path)
   o add my vertex back to *S* (it will be thrown out of S when a new path is received anyway)
   o remove previous vertex from *S*
   o if this vertex is not the loopingvertex call pushBackPath on previous vertex
   o else do nothing
- if previous vertex did not pass n or more paths or if it is the looping vertex, then do nothing

## Claims

1. Method for providing non-looping routing paths in a network from a begin vertex to a destination vertex, the network has at least three vertices and at least three edges, the at least three vertices and the at least three edges defining a graph G and the edges of the graph G having associated costs, wherein each vertex comprises a path list which describes ways of how the vertex can be reached from the begin vertex, the method comprising the steps of:
a) Defining the begin vertex;
b) Providing an empty shortest path vertices collection S, wherein the collection S is the set of vertices whose shortest distance from the begin vertex is already known;
c) Finding a vertex that is not in S, with the lowest costs between the begin vertex and the vertex;
d) Forwarding on outgoing edges of the lowest cost vertex the paths of its list of paths to its neighbouring vertex/vertices;
e) Adding the forwarded paths to the path lists of each neighbouring vertex, respectively;
f) Detecting looping paths and delete looping paths from the path lists of the neighbouring vertices, wherein the looping paths are detected by determining if in a path a vertex is present twice;
g) Adding the lowest cost vertex to S; and
h) Repeating steps c), d), e), f) and g).

2. Method according to claim 1, wherein in step d) the costs of the respective paths are forwarded to the neighbouring vertex/vertices.

3. Method according to claim 1 or 2, wherein in step d) a neighbouring vertex is deleted from S if the neighbouring vertex receives a new path.

4. Method according to one of the claims 1 to 3, wherein the number of paths with the lowest costs to be found for each vertex is limited to a predefined number n.

5. Method according to claim 4, wherein in step f) each vertex that is in the looping path after the following vertex of the looping vertex, and that has forwarded the looping path is provided to store an additional path in addition to the predefined number of paths to fined, and the following vertex of the looping vertex is deleted from the shortest path vertices collection, wherein, in particular, for each vertex in the loop having at least an incoming edge that is not part of the looping path, the vertex where the incoming edge is coming from is removed from S

6. Method according to claim 5, wherein each edge is provided with a blacklist, and the looping vertex is added to the blacklist of the edge from the lowest cost vertex directed to the looping vertex.

7. Method according to claim 6, wherein a path is not forwarded via an edge, if the path contains a vertex that is in the blacklist of the edge.

8. Method according to one of the claims 1 to 7, wherein in step e) the neighbouring vertex is marked as reachable and steps c), d), e), f) and g) are repeated in step h) until no more vertex can be found in the graph G which is reachable but not in shortest path vertices collection S.

9. Method according to one of the claims 1 to 8, wherein the network is a communication network, in particular a circuit switched or packet switched telecommunication network, the vertices in particular being network elements
and the edges being telecommunication links, preferably the costs correspond to the quality of service of a link and/or the distance between two network elements that are connected via that link.

10. Method according to one of the claims 1 to 9, wherein the network is a road network, in particular the edges corresponding to the streets and the vertices to the intersections, preferable the costs correspond to the distance between two intersections that are connected by the street, the costs for fuel and/or toll to use that street.

11. Method according to one of the claims 1 to 10, wherein at least a predefined number n of shortest paths between the begin vertex and the destination vertex, in particular the two or three shortest paths between the begin vertex and the destination vertex, are displayed, in particular to an operator.

12. Routing device being adapted to perform a method according to one of the claims 1 to 11.

13. Routing device according to claim 12 comprising a memory adapted to store for each destination vertex at least two shortest paths, preferably at least three or four shortest paths, from the begin vertex to the destination vertex, preferably the memory having stored the vertices and the paths in an array D and/or to store for each path the respective associated costs and for each edge a blacklist of at least one vertex of the graph.

## Patentansprüche

1. Verfahren zum Bereitstellen von Routing-Pfaden ohne Schleifen in einem Netzwerk von einem Ursprungsvertex zu einem Zielvertex, wobei das Netzwerk mindestens drei Vertices und mindestens drei Kanten aufweist, wobei die mindestens drei Vertices und die mindestens drei Kanten einen Graphen G definieren und die Kanten des Graphen G mit Kosten assoziiert sind, wobei jeder Vertex eine Pfad liste umfasst, welche Wege beschreibt, über welche der Vertex von dem Ursprungsvertex aus erreicht werden kann, wobei das Verfahren die folgenden Schritte umfasst:
a) Definieren des Ursprungsvertex;
b) Bereitstellen einen leeren Sammlung S von Vertices mit dem kürzesten Pfad, wobei die Sammlung S derjenige Satz von Vertices ist, dessen kürzeste Entfernung von dem Ursprungsvertex bereits bekannt ist;
c) Auffinden eines Vertex, der nicht in S enthalten ist, mit den niedrigsten Kosten zwischen dem Ursprungsvertex und dem Vertex;
d) Weiterleiten, auf Ausgangskanten des Vertex mit den niedrigsten Kosten, der Pfade seiner Pfadliste an seine benachbarte(n) Vertex/Vertices;
e) Hinzufügen der weitergeleiteten Pfade zu den jeweiligen Pfadlisten eines jeden benachbarten Vertex;
f) Erfassen von schleifenförmigen Pfaden und Löschen der schleifenförmigen Pfade aus den Pfadlisten der benachbarten Vertices, wobei die schleifenförmigen Pfade durch Ermitteln, ob ein Vertex zweimal in einem Pfad vorhanden ist, erfasst werden,
g) Hinzufügen des Vertex mit den niedrigsten Kosten zu S; und
h) Wiederholen der Schritte c), d), e), f) und g).

2. Verfahren nach Anspruch 1, wobei in Schritt d) die Kosten der jeweiligen Pfade an den/die benachbarten Vertex/Vertices weitergeleitet werden.

3. Verfahren nach Anspruch 1 oder 2, wobei in Schritt d) ein benachbarter Vertex aus S gelöscht wird, wenn der benachbarte Vertex einen neuen Pfad empfängt.

4. Verfahren nach einem der Ansprüche 1 bis 3, wobei die Anzahl der für jeden Vertex aufzufindenen Pfade mit den niedrigsten Kosten auf eine vordefinierte Anzahl n begrenzt ist.

5. Verfahren nach Anspruch 4, wobei in Schritt f) jeder Vertex, der sich in dem schleifenförmigen Pfad nach dem folgenden Vertex des schleifenförmigen Vertex befindet und den schleifenförmigen Pfad weitergeleitet hat, für das Speichern eines zusätzlichen Pfads zusätzlich zu der vordefinierten Anzahl von aufzufindenen Pfaden ausgelegt ist und der folgende Vertex des schleifenförmigen Vertex aus der Sammlung der Vertices mit dem kürzesten Pfad gelöscht wird, wobei, insbesondere, für jeden Vertex in der Schleife mit mindestens einer Eintrittskante, welcher nicht dem schleifenförmigen Pfad angehört, der Vertex, von weichem die Eintrittskante stammt, aus S entfernt wird.

6. Verfahren nach Anspruch 5, wobei jede Kante eine schwarze Liste aufweist und der schleifenförmige Vertex zu der schwarzen Liste der Kante von dem Vertex mit den niedrigsten Kosten, der zu dem schleifenförmigen Vertex führt, hinzugefügt wird.

7. Verfahren nach Anspruch 6, wobei ein Pfad nicht über eine Kante weitergeleitet wird, wenn der Pfad einen Vertex beinhaltet, der sich in der schwarzen Liste der Kante befindet.

8. Verfahren nach einem der Anspräche 1 bis 7, wobei in Schritt e) der benachbarte Vertex als erreichbar markiert ist und die Schritte c), d), e), f) und g) in Schritt h) so lange wiederholt werden, bis in dem Graphen G keine Vertices mehr gefunden werden, die zwar erreichbar sind, sich jedoch nicht in der Sammlung S der Vertices mit dem kürzesten Pfad befinden.

9. Verfahren nach einem der Anspräche 1 bis 8, wobei das Netzwerk ein Kommunikationsnetzwerk, insbesondere ein leitungsvermitteltes oder paketvermitteltes Telekommunikationswerk ist, wobei die Vertices insbesondere Netzwerkelemente und die Kanten Telekommunikationsverbindungen sind, wobei vorzugsweise die Kosten der Dienstgüte einer Verbindung und/oder der Entfernung zwischen zwei Netzwerkelementen, die über diese Verbindung verbunden sind, entsprechen.

10. Verfahren nach einem der Anspruche 1 bis 9, wobei das Netzwerk ein Verkehrswegenetz ist, wobei insbesondere die Kanten den Straßen und die Vertices den Kreuzungen entsprechen, wobei vorzugsweise die Kosten der Entfernung zwischen zwei Kreuzungen, die durch die Straße verbunden sind, den Kosten für Kraftstoff und/oder den Gebühren für die Benutzung dieser Straße entsprechen.

11. Verfahren nach einem der Ansprüche 1 bis 10, wobei mindestens eine vordefinierte Anzahl n von kürzesten Pfaden zwischen dem Ursprungsvertex und dem Zielvertex, insbesondere die zwei oder drei kürzesten Pfade zwischen dem Ursprungsvertex und dem Zielvertex, angezeigt werden, insbesondere für einen Betreiber.

12. Routing-Vorrichtung, ausgelegt für das Durchführen eines Verfahrens gemäß einem der Anspruche 1 bis 11.

13. Routing-Vorrichtung nach Anspruch 12, umfassend einen Speicher, der dazu ausgelegt ist, für jeden Zielvertex mindestens zwei kürzeste Pfade, vorzugsweise mindestens drei oder vier kürzeste Pfade, von dem Ursprungsvertex zu dem Zielvertex zu speichern, wobei die Vertices und die Pfade vorzugsweise in einer Anordnung D in dem Speicher gespeichert werden, und/oder für jeden Pfad die jeweiligen assoziierten Kosten und für jede Kante eine schwarze Liste mindestens eines Vertex des Graphen zu speichern.

## Revendications

1. Procédé de réalisation de trajets de routage sans bouclage dans un réseau entre un sommet d'origine et un sommet de destination, le réseau possédant au moins trois sommets et au moins trois côtés, les au moins trois sommets et les au moins trois côtés définissant un graphe G et les côtés du graphe G ayant des coûts associés, chaque sommet comprenant une liste de trajets qui décrit des manières par lesquelles le sommet peut être atteint depuis le sommet d'origine, le procédé comprenant les étapes suivantes :
a) Définition du sommet d'origine ;
b) Fourniture d'un ensemble S vide de sommets au trajet le plus court, l'ensemble S étant l'ensemble des sommets dont la distance la plus courte depuis le sommet d'origine est déjà connue ;
c) Recherche d'un sommet qui ne se trouve pas dans S, avec le coût le plus bas entre le sommet d'origine et le sommet ;
d) Transfert sur les côtés sortants du sommet ayant le coût le plus bas des trajets de sa liste de trajets vers son/ses sommet/s voisin(s) ;
e) Ajout des trajets transférés aux listes de trajets respectives de chaque sommet voisin ;
f) Détection des trajets de bouclage et suppression des trajets de bouclage des listes de trajets des sommets voisins, les trajets de bouclage étant détectés en déterminant si un sommet est présent deux fois dans un trajet ;
g) Ajout du sommet ayant le coût le plus bas à S ; et
h) Répétition des étapes c), d), e), f) et g).

2. Procédé selon la revendication 1, selon lequel, à l'étape d), les coûts des trajets respectifs sont transférées au(x) sommet(s) voisin(s).

3. Procédé selon la revendication 1 ou 2, selon lequel, à l'étape d), un sommet voisin est supprimé de S si le sommet voisin reçoit un nouveau trajet.

4. Procédé selon l'une des revendications 1 à 3, selon lequel le nombre de trajets ayant le coût le plus bas à rechercher pour chaque sommet est limité à un nombre prédéfini n.

5. Procédé selon la revendication 4, selon lequel, à l'étape f), chaque sommet qui se trouve dans le trajet de bouclage après le sommet suivant du sommet de bouclage et qui a transféré le trajet de bouclage est amené à stocker un trajet supplémentaire en plus du nombre de trajets prédéfini à rechercher, et le sommet qui suit le sommet de bouclage est supprimé de l'ensemble des sommets au trajet le plus court, procédé notamment selon lequel, pour chaque sommet dans la boucle ayant au moins un côté entrant qui ne fait pas partie du trajet de bouclage, le sommet duquel provient le côté entrant est supprimé de S.

6. Procédé selon la revendication 5, selon lequel chaque côté est doté d'une liste noire et le sommet de bouclage est ajouté à la liste noire du côté depuis le sommet ayant le coût le plus bas en direction du sommet de bouclage.

7. Procédé selon la revendication 6, selon lequel un trajet n'est pas transféré par le biais d'un côté si le trajet contient un sommet qui se trouve dans la liste noire du côté.

8. Procédé selon l'une des revendications 1 à 7, selon lequel, à l'étape e), le sommet voisin est marqué joignable et les étapes c), d), e), f) et g) sont répétées à l'étape h) jusqu'à ce qu'il ne soit plus possible de trouver dans le graphe G un sommet qui est joignable, mais qui ne se trouve pas dans l'ensemble S de sommets au trajet le plus court.

9. Procédé selon l'une des revendications 1 à 8, selon lequel le réseau est un réseau de communication, notamment un réseau de télécommunications à commutation de circuits ou à commutation de paquets, les sommets étant notamment des éléments de réseau et les côtés étant des liaisons de télécommunication, le coût correspondant de préférence à la qualité de service d'une liaison et/ou à la distance entre deux éléments de réseau qui sont connectés par le biais de cette liaison.

10. Procédé selon l'une des revendications 1 à 9, selon lequel le réseau est un réseau routier, les côtés correspondant notamment aux routes et les sommets aux intersections, le coût correspondant de préférence à la distance entre deux intersections qui sont reliées par la route, au coût du carburant et/ou du péage pour l'utilisation de cette route.

11. Procédé selon l'une des revendications 1 à 10, selon lequel au moins un nombre n prédéfini de trajets les plus courts entre le sommet d'origine et le sommet de destination, notamment les deux ou trois trajets les plus courts entre le sommet d'origine et le sommet de destination, sont affichés, notamment à l'attention d'un opérateur.

12. Dispositif de routage adapté pour mettre en oeuvre un procédé selon l'une des revendications 1 à 11.

13. Dispositif de routage selon la revendication 12, comprenant une mémoire adaptée pour stocker au moins deux trajets les plus courts pour chaque sommet de destination, de préférence au moins trois ou quatre trajets les plus courts, entre le sommet d'origine et le sommet de destination, la mémoire ayant de préférence stocké les sommets et les trajets dans une zone D et/ou pour stocker le coût associé correspondant pour chaque trajet et, pour chaque côté, une liste noire contenant au moins un sommet du graphe.
